(19) **Europäisches Patentamt / European Patent Office / Office européen des brevets**

(11) **EP 2 832 756 A1**

(12) **EUROPEAN PATENT APPLICATION**
published in accordance with Art. 153(4) EPC

(43) Date of publication:
**04.02.2015 Bulletin 2015/06**

(51) Int Cl.:
*C08G 18/12* (2006.01)   *C08K 5/17* (2006.01)
*C08K 5/24* (2006.01)   *C08K 5/33* (2006.01)
*C08L 75/04* (2006.01)   *C09D 5/02* (2006.01)
*C09D 175/04* (2006.01)

(21) Application number: 13768014.6

(22) Date of filing: **28.03.2013**

(86) International application number:
**PCT/JP2013/059190**

(87) International publication number:
**WO 2013/146986 (03.10.2013 Gazette 2013/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **29.03.2012   JP 2012075640**

(71) Applicant: UBE Industries, Ltd.
**Yamaguchi 755-8633 (JP)**

(72) Inventors:
• **MORIKAMI, Atsushi**
**Ube-shi**
**Yamaguchi 755-8633 (JP)**

• **NAIKI, Masahiro**
**Ube-shi**
**Yamaguchi 755-8633 (JP)**
• **ADACHI, Fumio**
**Ube-shi**
**Yamaguchi 755-8633 (JP)**
• **TAKAHASHI, Manabu**
**Ube-shi**
**Yamaguchi 755-8633 (JP)**
• **MIYOSHI, Kenta**
**Ube-shi**
**Yamaguchi 755-8633 (JP)**

(74) Representative: **Adam, Holger**
**Kraus & Weisert**
**Patentanwälte PartGmbB**
**Thomas-Wimmer-Ring 15**
**80539 München (DE)**

(54) **AQUEOUS POLYURETHANE RESIN DISPERSION**

(57)   The present invention provides an aqueous polyurethane resin dispersion wherein a polyurethane resin is dispersed in an aqueous medium, wherein the polyurethane resin is obtained by reacting (A) a polyurethane prepolymer with (B) a chain extender, wherein (A) the polyurethane prepolymer is obtained by reacting (a) a polyisocyanate compound, (b) a polyol compound, (c) an acid group-containing polyol compound, with (d) a blocking agent for isocyanate group, wherein the total of the content of urethane bonds and the content of urea bonds in the aqueous polyurethane resin dispersion is 8 to 13 wt % based on a solid content, the content of carbonate bonds in the aqueous polyurethane resin dispersion is 15 to 40 wt % based on the solid content, and the content of isocyanate groups wherein the blocking agent is bonded thereto in the aqueous polyurethane resin dispersion is 0.3 to 2.0 wt %, wherein an alkanedioic dihydrazide is contained as the chain extender.

EP 2 832 756 A1

**Description**

FIELD OF THE INVENTION

The present invention relates to an aqueous polyurethane resin dispersion wherein a polyurethane resin is dispersed in an aqueous medium. Further, the present invention relates to a coating composition containing the aqueous polyurethane resin dispersion and a polyurethane resin film obtained by drying a composition comprising the polyurethane resin dispersion by heating it.

BACKGROUND ART

An aqueous polyurethane resin dispersion can produce a coating film having, for example, adhesive properties, a wear resistance, and rubber properties, and is an environment-friendly material such that the use of a volatile organic substance can be reduced, as compared to that in a conventional solvent polyurethane. Therefore, the solvent polyurethane is being replaced by such a material.
Polycarbonate polyol is a compound useful as a raw material for polyurethane resin, and a reaction of the polycarbonate polyol with an isocyanate compound can produce a polyurethane resin having durability used in, for example, a rigid foam, a flexible foam, a paint, an adhesive, a synthetic leather, and an ink binder. It is reported that the polyurethane resin using polycarbonate polyol has features exhibited by high cohesion due to carbonate groups and is excellent in, for example, water resistance, heat resistance, oil resistance, elastic recovery, wear resistance, and weathering resistance (see, for example, non-patent document 1). Further, it is known that a coating film obtained by applying an aqueous urethane resin dispersion using the polycarbonate polyol as a raw material exhibits, for example, excellent light resistance, heat resistance, hydrolysis resistance, and oil resistance (see, for example, patent document 1).
As mentioned above, the aqueous polyurethane resin dispersion using the polycarbonate polyol exhibits excellent properties. However, the properties are not satisfactory, as compared to those of the solvent polyurethane. Particularly, the solvent resistance and water resistance of the coating film formed from the aqueous dispersion are unsatisfactory. For improving such properties, a method is performed in which a crosslinked structure is introduced into the polyurethane resin in the aqueous dispersion, or in which the aqueous polyurethane resin dispersion in the form of a composition having introduced thereinto a crosslinking material, such as an epoxy resin or a polyfunctional isocyanate, is subjected to crosslinking upon being cured. Especially, the aqueous polyurethane resin dispersion having blocked isocyanate groups is stable at room temperature, and hence can be used as a one-pack type crosslinkable dispersion having high storage stability, which is of great significance (see, for example, patent documents 2 and 3). It is also known that the aqueous polyurethane resin dispersion using the polycarbonate polyol as a raw material has a characteristic feature such that the adhesion to an electrodeposition coating is high (see, for example, patent document 4).
Further, the present inventors have found that an aqueous polyurethane resin dispersion having urethane bonds, urea bonds, and carbonate bonds and having blocked isocyanate groups in a specific amount can control the film formation rate after applied and enables the resultant coating film to be redispersed in water, and that the coating film obtained by applying the aqueous polyurethane resin dispersion and heating it has excellent water resistance, excellent solvent resistance, excellent adhesion to an electrodeposition coating, and high tensile breaking energy and hence has excellent impact resistance (see, for example, patent document 5).

Patent document 1: Japanese Laid-open Patent [Kokai] Publication No. Hei 10-120757
Patent document 2: Japanese Laid-open Patent [Kokai] Publication No. 2002-128851
Patent document 3: Japanese Laid-open Patent [Kokai] Publication No. 2000-104015
Patent document 4: Japanese Laid-open Patent [Kokai] Publication No. 2005-220255
Patent document 5: International Patent Application Publication No. 2010/098316 pamphlet
Non-patent document 1: "Latest Polyurethane Materials and Applied Techniques", published by CMC Publishing Co., Ltd., Chapter 2, page 43

SUMMARY OF THE INVENTION

Problems to be Solved by the Invention

The aqueous polyurethane resin dispersion, which is used as a film, a paint, or a coating material, is applied to, for example, a substrate using an application apparatus, such as a bar coater, a roll coater, or an air spray. The applied aqueous polyurethane resin dispersion is dried by heating to form a coating film on the substrate. However, a conventional aqueous polyurethane resin dispersion may cause a problem that the coating film formed from the dispersion cannot achieve satisfactory adhesion to the substrate and large tensile breaking energy.

A problem of the present invention is to provide an aqueous polyurethane resin dispersion wherein a film formed by applying the dispersion onto a substrate can achieve large tensile breaking energy and excellent adhesion to the substrate.

Means to Solve the Problems

The present invention has been made in order to solve the above problems, and specifically has the following constitution.

[1] An aqueous polyurethane resin dispersion wherein a polyurethane resin is dispersed in an aqueous medium, wherein the polyurethane resin is obtained by reacting (A) a polyurethane prepolymer with (B) a chain extender that has reactivity with isocyanate groups of the polyurethane prepolymer, wherein (A) the polyurethane prepolymer is obtained by reacting (a) a polyisocyanate compound, (b) at least one polyol compound comprising a polycarbonate polyol that has a number average molecular weight of 800 to 3,500, (c) an acid group-containing polyol compound, with (d) a blocking agent for isocyanate group that dissociates at 80 to 180°C, wherein the total of the content of urethane bonds and the content of urea bonds in the aqueous polyurethane resin dispersion is 8 to 13 wt % based on a solid content, the content of carbonate bonds in the aqueous polyurethane resin dispersion is 15 to 40 wt % based on the solid content, and the content of isocyanate groups wherein the blocking agent is bonded thereto in the aqueous polyurethane resin dispersion is 0.3 to 2.0 wt % based on the solid content and in terms of an isocyanate group, and wherein (B) the chain extender contains an alkanedioic dihydrazide having 4 to 10 carbon atoms as an essential component.
[2] The aqueous polyurethane resin dispersion described in the above-mentioned [1], wherein the content of the alkanedioic dihydrazide having 4 to 10 carbon atoms in the aqueous polyurethane resin dispersion is 0.8 to 10 wt % based on the solid content.
[3] The aqueous polyurethane resin dispersion described in the above-mentioned [1] or [2], wherein the alkanedioic dihydrazide having 4 to 10 carbon atoms is adipic dihydrazide.
[4] The aqueous polyurethane resin dispersion described in the above-mentioned any one of [1] to [3], wherein (B) the chain extender contains an alkylenediamine as an optional component in an amount of 0 to 4 wt % based on the solid content.
[5] The aqueous polyurethane resin dispersion described in the above-mentioned [4], wherein the alkylenediamine is 2-methyl-1,5-pentanediamine.
[6] The aqueous polyurethane resin dispersion described in the above-mentioned any one of [1] to [5], wherein (A) the polyurethane prepolymer, (B) the chain extender, and an aminoalcohol are reacted, so that a hydroxyl group is added to a part of the end of the molecule of the polyurethane resin.
[7] The aqueous polyurethane resin dispersion described in the above-mentioned any one of [1] to [6], wherein a monoalcohol or a monoamine is reacted as an optional component, so that a part of the end of the molecule of the polyurethane resin is substituted by a nonreactive functional group.
[8] The aqueous polyurethane resin dispersion described in the above-mentioned any one of [1] to [7], wherein the polyurethane resin has a weight average molecular weight of 20,000 to 100,000, preferably 20,000 to less than 55,000.
[9] The aqueous polyurethane resin dispersion described in the above-mentioned any one of [1] to [8], which has an acid value of 10 to 30 mg KOH/g.
[10] The aqueous polyurethane resin dispersion described in the above-mentioned any one of [1] to [9], wherein the polyurethane resin contains an alicyclic structure, and wherein the content of the alicyclic structure in the aqueous polyurethane resin dispersion is 10 to 30 wt % based on the solid content.
[11] The aqueous polyurethane resin dispersion described in the above-mentioned any one of [1] to [10], wherein (a) the polyisocyanate compound is an alicyclic diisocyanate.
[12] The aqueous polyurethane resin dispersion described in the above-mentioned any one of [1] to [11], wherein (d) the blocking agent is at least one member selected from the group consisting of an oxime compound, a pyrazole compound, and a malonic ester compound.
[13] A coating material composition comprising the aqueous polyurethane resin dispersion described in the above-mentioned any one of [1] to [12].
[14] A polyurethane resin film which is produced by drying a composition comprising the aqueous polyurethane resin dispersion described in the above-mentioned any one of [1] to [13] by heating it.

Further, the present invention involves the following embodiments.

[a1] An aqueous polyurethane resin dispersion wherein a polyurethane resin is dispersed in an aqueous medium,

wherein the polyurethane resin is obtained by reacting (A) a polyurethane prepolymer with (B) a chain extender that has reactivity with isocyanate groups of the polyurethane prepolymer, wherein (A) the polyurethane prepolymer is obtained by reacting (a) a polyisocyanate compound, (b) at least one polyol compound comprising a polycarbonate polyol that has a number average molecular weight of 800 to 3,500, (c) an acid group-containing polyol compound, with (d) a blocking agent for isocyanate group that dissociates at 80 to 180°C, wherein the total of the content of urethane bonds and the content of urea bonds in the aqueous polyurethane resin dispersion is 8 to 13 wt % based on a solid content, the content of carbonate bonds in the aqueous polyurethane resin dispersion is 15 to 40 wt % based on the solid content, and the content of isocyanate groups wherein the blocking agent is bonded thereto in the aqueous polyurethane resin dispersion is 0.3 to 2.0 wt % based on the solid content and in terms of an isocyanate group, wherein (B) the chain extender contains an alkanedioic dihydrazide having 4 to 10 carbon atoms and an alkylenediamine.

[a2] The aqueous polyurethane resin dispersion described in the above-mentioned [a1], wherein the content of the alkanedioic dihydrazide in the aqueous polyurethane resin dispersion is 0.8 wt % to less than 2 wt % based on the solid content.

[a3] The aqueous polyurethane resin dispersion described in the above-mentioned [a1] or [a2], wherein the alkanedioic dihydrazide is adipic dihydrazide.

[a4] The aqueous polyurethane resin dispersion described in the above-mentioned any one of [a1] to [a3], wherein the content of the alkylenediamine in (B) the chain extender is 30 to 90 mol%.

[a5] The aqueous polyurethane resin dispersion described in the above-mentioned any one of [a1] to [a4], wherein the alkylenediamine is an alkylenediamine having 2 to 10 carbon atoms and having two primary amino groups.

[a6] The aqueous polyurethane resin dispersion described in the above-mentioned any one of [a1] to [a5], wherein the alkylenediamine is 2-methyl-1,5-pentanediamine.

[a7] The aqueous polyurethane resin dispersion described in the above-mentioned any one of [a1] to [a6], wherein the polyurethane resin has a weight average molecular weight of 20,000 to 60,000, preferably 20,000 to less than 55,000.

[a8] The aqueous polyurethane resin dispersion described in the above-mentioned any one of [a1] to [a7], which has an acid value of 10 to 30 mg KOH/g.

[a9] The aqueous polyurethane resin dispersion described in the above-mentioned any one of [a1] to [a8], wherein the polyurethane resin contains an alicyclic structure, wherein the content of the alicyclic structure in the aqueous polyurethane resin dispersion is 10 to 30 wt % based on the solid content.

Further, the present invention involves the following embodiments.

[b1] An aqueous polyurethane resin dispersion wherein a polyurethane resin is dispersed in an aqueous medium, wherein the polyurethane resin is obtained by reacting (A) a polyurethane prepolymer with (B) a chain extender that has reactivity with isocyanate groups of the polyurethane prepolymer, wherein (A) the polyurethane prepolymer is obtained by reacting (a) a polyisocyanate compound, (b) at least one polyol compound comprising a polycarbonate polyol that has a number average molecular weight of 800 to 3,500, (c) an acid group-containing polyol compound, with (d) a blocking agent for isocyanate group that dissociates at 80 to 180°C, wherein the total of the content of urethane bonds and the content of urea bonds in the aqueous polyurethane resin dispersion is 8 to 13 wt % based on a solid content, the content of carbonate bonds in the aqueous polyurethane resin dispersion is 15 to 40 wt % based on the solid content, and the content of isocyanate groups wherein the blocking agent is bonded thereto in the aqueous polyurethane resin dispersion is 0.3 to 2.0 wt % based on the solid content and in terms of an isocyanate group, wherein (B) the chain extender contains an alkanedioic dihydrazide having 4 to 10 carbon atoms, wherein the polyurethane resin has a weight average molecular weight of 55,000 to 100,000.

[b2] The aqueous polyurethane resin dispersion described in the above-mentioned [b1], wherein the content of the alkanedioic dihydrazide in the aqueous polyurethane resin dispersion is 2 to 10 wt % based on the solid content.

[b3] The aqueous polyurethane resin dispersion described in the above-mentioned [b1] or [b2], wherein the alkanedioic dihydrazide is adipic dihydrazide.

[b4] The aqueous polyurethane resin dispersion described in the above-mentioned any one of [b1] to [b3], wherein the content of isocyanate groups wherein the blocking agent is bonded thereto in the aqueous polyurethane resin dispersion is 0.3 to 1.2 wt % based on the solid content and in terms of an isocyanate group.

[b5] The aqueous polyurethane resin dispersion described in the above-mentioned any one of [b1] to [b4], wherein the content of urea bonds in the aqueous polyurethane resin dispersion is 3.4 to 4.5 wt % based on the solid content.

[c1] An aqueous polyurethane resin dispersion wherein a polyurethane resin is dispersed in an aqueous medium, wherein the polyurethane resin is obtained by reacting (A) a polyurethane prepolymer with (B) a chain extender that has reactivity with isocyanate groups of the polyurethane prepolymer, wherein (A) the polyurethane prepolymer is obtained by reacting (a) a polyisocyanate compound, (b) at least one polyol compound comprising a polycarbonate polyol that has a number average molecular weight of 800 to 3,500, (c) an acid group-containing polyol compound, with (d) a blocking agent for isocyanate group that dissociates at 80 to 180°C, wherein the total of the content of urethane bonds and the content of urea bonds in the aqueous polyurethane resin dispersion is 8 to 13 wt % based on a solid content, the content of carbonate bonds in the aqueous polyurethane resin dispersion is 15 to 40 wt % based on the solid content, and the content of isocyanate groups wherein the blocking agent is bonded thereto in the aqueous polyurethane resin dispersion is 0.3 to 2.0 wt % based on the solid content and in terms of an isocyanate group, wherein (B) the chain extender contains an alkanedioic dihydrazide having 4 to 10 carbon atoms as an essential component in an amount of 2 to 10 wt % based on the solid content, wherein the polyurethane resin has a weight average molecular weight of 20,000 to less than 55,000.

[d1] An aqueous polyurethane resin dispersion comprising a polyurethane resin dispersed in an aqueous medium, wherein the polyurethane resin is obtained by reacting (A) a polyurethane prepolymer with (B) a chain extender having reactivity with isocyanate groups of the polyurethane prepolymer, wherein (A) the polyurethane prepolymer is obtained by reacting (a) a polyisocyanate compound, (b) at least one polyol compound comprising a polycarbonate polyol that has a number average molecular weight of 800 to 3,500, (c) an acid group-containing polyol compound, with (d) a blocking agent for isocyanate group that dissociates at 80 to 180°C, wherein the content of urethane bonds in the aqueous polyurethane resin dispersion is 5 to 7 wt % based on a solid content, the content of urea bonds in the aqueous polyurethane resin dispersion is 3 wt % or less based on the solid content, the total of the content of urethane bonds and the content of urea bonds in the aqueous polyurethane resin dispersion is 8 to 10 wt % based on the solid content, the content of carbonate bonds in the aqueous polyurethane resin dispersion is 15 to 40 wt % based on the solid content, and the content of isocyanate groups wherein the blocking agent is bonded thereto in the aqueous polyurethane resin dispersion is 0.3 to 2.0 wt % based on the solid content and in terms of an isocyanate group, wherein (B) the chain extender contains an alkanedioic dihydrazide having 4 to 10 carbon atoms as an essential component in an amount of 2 to 10 wt % based on the solid content, wherein the polyurethane resin has a weight average molecular weight of 20,000 to less than 55,000.

[e1] An aqueous polyurethane resin dispersion wherein a polyurethane resin is dispersed in an aqueous medium, wherein the polyurethane resin is obtained by reacting (A) a polyurethane prepolymer, (B) a chain extender that has reactivity with isocyanate groups of the polyurethane prepolymer, with (C) a chain terminator, wherein (A) the polyurethane prepolymer is obtained by reacting (a) a polyisocyanate compound, (b) at least one polyol compound comprising a polycarbonate polyol that has a number average molecular weight of 800 to 3,500, (c) an acid group-containing polyol compound, with (d) a blocking agent for isocyanate group that dissociates at 80 to 180°C, wherein the total of the content of urethane bonds and the content of urea bonds in the aqueous polyurethane resin dispersion is 8 to 13 wt % based on a solid content, the content of carbonate bonds in the aqueous polyurethane resin dispersion is 15 to 40 wt % based on the solid content, and the content of isocyanate groups wherein the blocking agent is bonded thereto in the aqueous polyurethane resin dispersion is 0.3 to 2.0 wt % based on the solid content and in terms of an isocyanate group, wherein (B) the chain extender contains an alkanedioic dihydrazide having 4 to 10 carbon atoms as an essential component in an amount of 0.8 to 10 wt % based on the solid content wherein the chain terminator is a monoalcohol and/or a monoamine, wherein the polyurethane resin has a weight average molecular weight of 20,000 to less than 55,000.

Effect of the Invention

The present invention can provide an aqueous polyurethane resin dispersion wherein a film formed by applying the dispersion onto a substrate can achieve large tensile breaking energy and excellent adhesion to the substrate.

Further, a coating film obtained using the aqueous polyurethane resin dispersion of the present invention exhibits high adhesion to an electrodeposition coating, and therefore can be utilized as a protective film for steel plate. Further, the polyurethane resin film of the present invention can be utilized as a decorating film.

MODE FOR CARRYING OUT THE INVENTION

In the present specification, the range of values expressed using "to" indicates a range which includes the figures shown before and after "to" as, respectively, the minimum value and the maximum value. Further, with respect to the amount of a component contained in the composition, when a plurality of materials are present in the composition as the components of the composition, the amount of the components means the total amount of the materials present in the composition unless otherwise specified.

The aqueous polyurethane resin dispersion of the present invention is that wherein a polyurethane resin dispersed in an aqueous medium, wherein the polyurethane resin is obtained by reacting (A) a polyurethane prepolymer with (B) a chain extender that has reactivity with isocyanate groups of the polyurethane prepolymer, wherein (A) the polyurethane prepolymer is obtained by reacting (a) a polyisocyanate compound, (b) at least one polyol compound comprising a polycarbonate polyol that has a number average molecular weight of 800 to 3,500, (c) an acid group-containing polyol compound, with (d) a blocking agent for isocyanate group that dissociates at 80 to 180°C, wherein the total of the content of urethane bonds and the content of urea bonds in the aqueous polyurethane resin dispersion is 8 to 13 wt % based on a solid content, the content of carbonate bonds in the aqueous polyurethane resin dispersion is 15 to 40 wt % based on the solid content, and the content of isocyanate groups wherein the blocking agent is bonded thereto in the aqueous polyurethane resin dispersion is 0.3 to 2.0 wt % based on the solid content and in terms of an isocyanate group, wherein (B) the chain extender contains an alkanedioic dihydrazide having 4 to 10 carbon atoms as an essential component.

There is a conventional aqueous polyurethane resin dispersion such that after the dispersion is applied to, for example, a substrate, the resultant paint layer or coating film is removed by washing or peeling the paint layer or coating film and the dispersion can be further applied. However, there is a problem in that the coating film, which facilitates the removal thereof and further application of the dispersion, has low tensile breaking energy and easily suffers formation of a crack therein.

In the present invention, there can be obtained an aqueous polyurethane resin dispersion wherein a film formed from the dispersion can achieve high tensile breaking energy and a high degree of swelling with an aqueous cleaning fluid (for example, an aqueous solution containing an alcohol, an amine, an aminoalcohol, or cellosolve) so that the resultant film can be removed and the dispersion can be further applied. A coating film formed from the aqueous polyurethane resin dispersion of the present invention is advantageously used as a protective film for an electrodeposition coating of a steel plate used in, for example, building materials, electric appliances, vehicles, industrial apparatuses, and office machines.

In forming a multilayer coating film, an aqueous coating material may be further applied onto an aqueous coating film. When the coating film has poor water resistance, the stacked coating film formed by applying the aqueous coating material onto the aqueous coating material may be poor in surface smoothness.

In the present invention, there can be obtained an aqueous polyurethane resin dispersion which forms a coating film having high tensile breaking energy and a low degree of swelling with water as well as high water resistance.

Further, as a paint for a plastic molded article, such as a car bumper, there is desired a paint for obtaining a coating film having a low elastic modulus such that the coating film can follow the deformation of the plastic molded article. However, there is a problem in that the coating film having a low elastic modulus has a small tensile elongation at break and low breaking energy so that the coating film easily suffers formation of a crack therein when receiving an impact.

In the present invention, there can be obtained an aqueous polyurethane resin dispersion which forms a coating film having low elastic modulus and large tensile elongation at break as well as high breaking energy.

On the other hand, as a paint for steel plate, a paint having both a crack resistance and an impact resistance is desired. However, when the coating film is reduced in the degree of swelling with water in order to improve the water resistance, the elastic modulus of the film tends to be reduced.

In the present invention, there can be obtained an aqueous polyurethane resin dispersion which forms a coating film that is reduced in the degree of swelling with water while maintaining the elastic modulus of the coating film at 50 MPa or more, achieving both a crack resistance and an impact resistance.

[(a) Polyisocyanate compound]

(a) Polyisocyanate compound that can be used in the present invention is not particularly limited as long as it is a compound having two or more isocyanate groups, and may be any of an aromatic polyisocyanate compound, a linear or branched aliphatic polyisocyanate compound, and an alicyclic polyisocyanate compound. Specific examples of polyisocyanate compounds include aromatic polyisocyanate compounds, such as 1,3-phenylene diisocyanate, 1,4-phenylene diisocyanate, 2,4-tolylene diisocyanate (TDI), 2,6-tolylene diisocyanate, 4,4'-diphenylenemethane diisocyanate (MDI), 2,4-diphenylmethane diisocyanate, 4,4'-diisocyanatobiphenyl, 3,3'-dimethyl-4,4'-diisocyanatobiphenyl, 3,3'-dimethyl-4,4'-diisocyanatodiphenylmethane, 1,5-naphthylene diisocyanate, m-isocyanatophenylsulfonyl isocyanate, and p-isocyanatophenylsulfonyl isocyanate; aliphatic polyisocyanate compounds, such as ethylene diisocyanate, tetramethylene diisocyanate, hexamethylene diisocyanate (HDI), dodecamethylene diisocyanate, 1,6,11-undecane triisocyanate, 2,2,4-trimethylhexamethylene diisocyanate, lysine diisocyanate, 2,6-diisocyanatomethyl caproate, bis(2-isocyanatoethyl) fumarate, bis(2-isocyanatoethyl) carbonate, and 2-isocyanatoethyl-2,6-diisocyanatohexanoate; and alicyclic polyisocyanate compounds, such as isophorone diisocyanate (IPDI), 4,4'-dicyclohexylmethane diisocyanate (hydrogenated MDI), cyclohexylene diisocyanate, methylcyclohexylene diisocyanate (hydrogenated TDI), bis(2-isocyanatoethyl)-4-cyclohexene-1,2-dicarboxylate, 2,5-norbornane diisocyanate, and 2,6-norbornane diisocyanate. These polyisocyanate compounds may be used alone or as a combination of plural types thereof.

Among the above-mentioned (a) polyisocyanate compound, preferred is an alicyclic polyisocyanate compound, and more preferred is an alicyclic diisocyanate compound. By using the alicyclic polyisocyanate compound, it is possible to obtain a coating film which is unlikely to suffer yellowing, and further it is likely that the obtained coating film has an increased hardness.

Of the alicyclic polyisocyanate compounds, from the viewpoint of controlling the reactivity and obtaining a coating film having high elastic modulus and low degree of swelling with water, especially preferred is 4,4'-dicyclohexylmethane diisocyanate (hydrogenated MDI).

[(b) Polyol compound]

(b) Polyol compound in the present invention is at least one polyol compound which comprises a polycarbonate polyol that has a number average molecular weight of 800 to 3,500 and which contains no acid group. (b) Polyol compound may comprise another polyol compound which contains no acid group and which is other than the polycarbonate polyol that has a number average molecular weight of 800 to 3,500.

[[(b-1) Polycarbonate polyol that has a number average molecular weight of 800 to 3,500]]

The polycarbonate polyol that has a number average molecular weight of 800 to 3,500 that can be used in the present invention is not particularly limited as long as it has a number average molecular weight of 800 to 3,500 and contains no acid group.

When the number average molecular weight of the polycarbonate polyol is less than 800, there is a problem in that, for example, the resultant coating film has low tensile breaking energy. When the number average molecular weight of the polycarbonate polyol is more than 3,500, there is a problem in that, for example, the resultant aqueous polyurethane resin dispersion has poor film formation properties. From the viewpoint of the tensile breaking energy of the coating film and the film formation properties, the number average molecular weight of the polycarbonate polyol is more preferably 1,500 to 3,000, further preferably 2,000 to 3,000.

From the viewpoint of the tensile breaking energy of the formed coating film, the percentage of (b-1) polycarbonate polyol that has a number average molecular weight of 800 to 3,500 in the weight of (b) polyol compound is preferably 50 wt % to 100 wt %, more preferably 70 wt % to 100 wt %, especially preferably 85 wt % to 100 wt%.

In the present invention, the number average molecular weight (Mn) of the polycarbonate polyol is determined from a hydroxyl value using the following formula.

$$Mn = (56,100 \times Valence)/Hydroxyl\ value$$

In the formula above, the valence is the number of hydroxyl group(s) of the polycarbonate polyol per molecule, and the hydroxyl value is measured in accordance with the method of JIS K 1557-B. When the polycarbonate polyol is a polycarbonate diol, the valence is 2.

With respect to the polycarbonate polyol, a polycarbonate polyol produced by a general method, such as a transesterification method for a polyol and a carbonic acid ester, or a phosgene method can be used.

Examples of polyols used as a raw material for the polycarbonate polyol include linear aliphatic diols, such as ethylene glycol, 1,3-propanediol, 1,4-butanediol, 1,5-pentanediol, 1,6-hexanediol, 1,7-pentanediol, 1,8-octanediol, 1,9-nonanediol, 1,10-decanediol, and 1,12-dodecanediol; branched aliphatic diols, such as 1,3-butanediol, 3-methylpentane-1,5-diol, 2-ethylhexane-1,6-diol, 2-methyl-1,3-pentanediol, neopentyl glycol, and 2-methyl-1,8-octanediol; alicyclic diols, such as 1,3-cyclohexanediol, 1,4-cyclohexanediol, 2,2'-bis(4-hydroxycyclohexyl)propane, 1,3-cyclohexanedimethanol, and 1,4-cyclohexanedimethanol; aromatic diols, such as 1,4-benzenedimethanol; and polyfunctional polyols, such as trimethylolpropane and pentaerythrithol. The polycarbonate polyol can be either formed from one type of polyol or formed from two or more types of polyols.

The polycarbonate polyol is preferably a polycarbonate polyol using at least one member selected from the group consisting of the above-mentioned linear aliphatic diol, branched aliphatic diol, alicyclic diol, aromatic diol, and polyfunctional polyol as a raw material, more preferably a polycarbonate polyol using the linear aliphatic diol and/or the branched aliphatic diol as a raw material, further preferably a polycarbonate polyol using the linear aliphatic diol as a raw material.

Further, the diol used as a raw material for the polycarbonate polyol preferably has 2 to 20 carbon atoms, more preferably 3 to 12 carbon atoms, further preferably 3 to 7 carbon atoms.

[[(b-2) Other polyol compound]]

In the present invention, in addition to (b-1) polycarbonate polyol that has a number average molecular weight of 800 to 3,500, (b-2) other polyol compound can be mixed into (b) polyol compound.

The other polyol compound is not particularly limited and includes, for example, a polyester polyol, a polyether polyol, a polycarbonate polyol other than the polycarbonate polyol that has a number average molecular weight of 800 to 3,500, an aliphatic diol, an alicyclic diol, an aromatic diol, and a polyfunctional polyol. Of these, preferred are an aliphatic diol, an alicyclic diol, and a polycarbonate polyol other than the polycarbonate polyol that has a number average molecular weight of 800 to 3,500.

(b-2) Other polyol compound does not include (c) acid group-containing polyol compound described in the next paragraph.

[(c) Acid group-containing polyol compound]

(c) Acid group-containing polyol compound that can be used in the present invention is not particularly limited as long as it is a compound having at least one acid group and two or more hydroxyl groups. Examples of acid groups include a carboxyl group and a sulfonic group. The acid group-containing polyol compound is preferably an acid group-containing diol compound, more preferably an acid group-containing diol compound having 5 to 8 carbon atoms. Specific examples of acid group-containing polyol compounds include 2,2-dimethylolpropionic acid, 2,2-dimethylolbutanoic acid, N,N-bishydroxyethylglycine, N,N-bishydroxyethylalanine, 3,4-dihydroxybutanesulfonic acid, and 3,6-dihydroxy-2-toluenesulfonic acid. These can be used alone or as a combination of plural types thereof. Among the acid group-containing polyol compounds, from the viewpoint of easy availability of the compound, preferred is 2,2-dimethylolpropionic acid.

[(d) Blocking agent]

In the present invention, as a blocking agent for isocyanate group, one which dissociates from an isocyanate group at 80 to 180°C is used. The blocking agent for isocyanate group means a compound which can react with an isocyanate group to change the isocyanate group to another functional group, and which can reversibly convert the changed functional group to an isocyanate group by heat treatment.

Examples of blocking agents that dissociates from an isocyanate group at 80 to 180°C include malonic diester compounds, such as dimethyl malonate and diethyl malonate; pyrazole compounds, such as 1,2-pyrazole and 3,5-dimethylpyrazole; oxime compounds, such as 1,2,4-triazole and methyl ethyl ketoxime; diisopropylamine, and caprolactam. These can be used alone or as a combination of plural types thereof.

Among the blocking agents, from the viewpoint of the dissociation temperature, preferred is at least one member selected from the group consisting of an oxime compound, a pyrazole compound, and a malonic diester compound, and, from the viewpoint of achieving excellent storage stability and high low-temperature thermal crosslinkability, more preferred is a pyrazole compound, and especially preferred is 3,5-dimethylpyrazole.

[(A) Polyurethane prepolymer]

(A) Polyurethane prepolymer that can be used in the present invention is a polyurethane prepolymer obtained by reacting (a) polyisocyanate compound, (b) at least one polyol compound comprising a polycarbonate polyol that has a number average molecular weight of 800 to 3,500 (hereinafter, referred to also simply as "polyol compound"), (c) acid group-containing polyol compound, with (d) blocking agent for isocyanate group that dissociates at 80 to 180°C (hereinafter, referred to also simply as "blocking agent").

The method for producing the polyurethane prepolymer is not particularly limited, and, for example, includes the following methods.

The first one is a method in which (a) polyisocyanate compound, (b) polyol compound, with (c) acid group-containing polyol compound are reacted in the presence or absence of an urethane reaction catalyst to effect an urethane-forming reaction, and then (d) blocking agent is reacted with the resultant product in the presence or absence of a blocking reaction catalyst to effect a blocking reaction, synthesizing (A) polyurethane prepolymer having blocked part of the terminal isocyanate group thereof.

The second one is a method in which (a) polyisocyanate compound with (d) blocking agent are reacted in the presence or absence of a blocking reaction catalyst to effect a blocking reaction, synthesizing a polyisocyanate compound having blocked part of the isocyanate group thereof, and the resultant compound is reacted with (b) polyol compound and (c) acid group-containing polyol compound in the presence or absence of an urethane reaction catalyst to effect an urethane-forming reaction, synthesizing (A) polyurethane prepolymer.

The urethane reaction catalyst is not particularly limited, and examples of urethane reaction catalysts include salts of a metal and an organic or inorganic acid, and organometal derivatives, such as tin catalysts (e.g., trimethyltin laurate and dibutyltin dilaurate) and lead catalysts (e.g., lead octylate), amine catalysts (such as triethylamine, N-ethylmorpholine, and triethylenediamine), and diazabicycloundecene catalysts. Of these, from the viewpoint of the reactivity, preferred is dibutyltin dilaurate.

The blocking reaction catalyst is not particularly limited, and examples of blocking reaction catalysts include dibutyltin dilaurate and alkali catalysts, such as sodium methoxide.

The conditions for urethane-forming reaction and the reaction conditions for blocking reaction are not particularly limited and can be appropriately selected according to, for example, the reactivity of the component used. For example, the reaction conditions for urethane-forming reaction at a temperature of 50 to 100°C for 3 to 15 hours can be selected. The reaction conditions for blocking reaction at a temperature of 50 to 100°C for 1 to 5 hours can be selected.

The urethane-forming reaction and the blocking reaction may be performed either independently or continuously.

[(B) Chain extender]

(B) Chain extender that can be used in the present invention contains at least one (B-1) alkanedioic dihydrazide having 4 to 10 carbon atoms as an essential component. With respect to (B) chain extender, (B-1) alkanedioic dihydrazide having 4 to 10 carbon atoms may be used alone, or (B-1) alkanedioic dihydrazide having 4 to 10 carbon atoms and (B-2) other chain extender may be used in combination.

The amount of (B) chain extender is preferably an amount such that the amount of hydrazide groups ($-CONHNH_2$) and amino groups ($-NH_2$) becomes 0.7 to 1.3 equivalent, relative to free isocyanate groups in the polyurethane prepolymer. When (B-1) alkanedioic dihydrazide having 4 to 10 carbon atoms and (B-2) other chain extender are used in combination, the amount of (B-1) alkanedioic dihydrazide having 4 to 10 carbon atoms in the whole chain extender is preferably 10 to 90 mol%, more preferably 10 to less than 50 mol%, further preferably 15 to 30 mol%, especially preferably 15 to 20 mol%.

The content of (B-1) alkanedioic dihydrazide having 4 to 10 carbon atoms is not particularly limited. The content of (B-1) alkanedioic dihydrazide having 4 to 10 carbon atoms in the mass of the aqueous polyurethane resin dispersion is preferably 0.8 to 10 wt %, more preferably 0.8 to 8 wt %, further preferably 0.8 to 6.5 wt % based on the solid content. When (B) chain extender contains the alkanedioic dihydrazide, the resultant coating film exhibits high tensile breaking energy and high hydrophilicity due to high hydrogen bonding of the alkanedioic dihydrazide, and thus the coating film has a resistance to an impact and can be removed by an aqueous cleaning fluid and the aqueous dispersion can be further applied. Further, the formed coating film has excellent water resistance. When the content of the alkanedioic dihydrazide in the aqueous polyurethane resin dispersion is 10 wt % or less based on the solid content, the resultant coating film has a low degree of swelling with water so that the water resistance is further improved. On the other hand, when the content of the alkanedioic dihydrazide in the aqueous polyurethane resin dispersion is 0.8 wt % or more based on the solid content, the resultant coating film exhibits satisfactorily large breaking energy.

When (B) chain extender does not contain the below-mentioned other chain extender, the content of the alkanedioic dihydrazide having 4 to 10 carbon atoms in the mass of the aqueous polyurethane resin dispersion is preferably 2 to 10 wt %, more preferably 2 to 8 wt %, further preferably 2 to 6.5 wt % based on the solid content.

Further, when the alkanedioic dihydrazide has 4 to 10 carbon atoms, an effect can be obtained such that it is possible to obtain a stable aqueous dispersion which can form a coating film having high breaking energy. The alkanedioic acid preferably has 4 to 8 carbon atoms, more preferably 5 to 7 carbon atoms.

Examples of alkanedioic dihydrazides having 4 to 10 carbon atoms include succinic dihydrazide, adipic dihydrazide, azelaic dihydrazide, and sebacic dihydrazide. Of these, from the viewpoint of the dispersion stability, preferred is adipic dihydrazide. These may be used alone or as a combination of plural types thereof.

With respect to (B) chain extender, the alkanedioic dihydrazide having 4 to 10 carbon atoms and (B-2) other chain extender may be used in combination. (B-2) Other chain extender is not particularly limited as long as it is a compound having two or more functional groups (preferably, e.g., amino groups or hydroxyl groups) that can react with an isocyanate group. Examples of the other chain extenders include alkylenediamines, such as ethylenediamine, 1,4-tetramethylenediamine, 2-methyl-1,5-pentanediamine, 1,4-butanediamine, 1,6-hexanediamine, 1,4-hexanediamine, 3-aminomethyl-3,5,5-trimethylcyclohexylamine, 1,3-bis(aminomethyl)cyclohexane, and xylylenediamine; polyamine compounds, such as piperazine, 2,5-dimethylpiperazine, diethylenetriamine, and triethylenetetramine; polyol compounds, such as ethylene glycol, propylene glycol, 1,4-butanediol, and 1,6-hexanediol; polyalkylene glycols, such as polyethylene glycol; and water. These may be used alone or as a combination of plural types thereof. As the other chain extender, of these, preferred is a primary diamine compound, more preferred is an alkylenediamine having two primary amino groups (hereinafter, referred to also as "primary alkylenediamine"), further preferred is a primary alkylenediamine having 2 to 12 carbon atoms, and especially preferred is a primary alkylenediamine having 5 to 9 carbon atoms. Especially it is preferable that a primary alkylenediamine, such as 2-methyl-1,5-pentanediamine, is added as an optional component, because the coating film can achieve a low degree of swelling with water and high tensile breaking energy. That is, there can be obtained an aqueous polyurethane resin dispersion which can form a coating film having high water resistance and high breaking energy.

When the chain extender contains the other chain extender, the content of a primary alkylenediamine, such as 2-methyl-1,5-pentanediamine, in the aqueous polyurethane resin dispersion is preferably 0 to 4 wt %, more preferably 1 to 3.5 wt %, especially preferably 2 to 3.5 wt % based on the solid content. When the content of a primary alkylenediamine, such as 2-methyl-1,5-pentanediamine, in the aqueous polyurethane resin dispersion is 4 wt % or less, the resultant coating film is likely to have high tensile breaking energy.

Further, when the alkanedioic dihydrazide and a primary alkylenediamine are used in combination, the amount of the primary alkylenediamine in (B) chain extender (including the alkanedioic dihydrazide and primary alkylenediamine) is preferably 30 to 90 mol%, more preferably 45 to 85 mol%, especially preferably 60 to 85 mol%.

Further, when the alkanedioic dihydrazide and a primary alkylenediamine are used in combination, the content of the alkanedioic dihydrazide having 4 to 10 carbon atoms in the mass of the aqueous polyurethane resin dispersion is preferably 0.8 to less than 2 wt %, more preferably 0.9 to 1.5 wt % based on the solid content.

The amount of (B) chain extender added is preferably equivalent or less to the unblocked isocyanate group which is the starting point of chain extension in (A) urethane prepolymer, more preferably 0.7 to 0.99 equivalent to the unblocked isocyanate group. When the chain extender is added in an amount equivalent or less to the unblocked isocyanate group, it is likely that a lowering of the molecular weight of the urethane polymer formed after chain extension is suppressed, so that a coating film obtained by applying the resultant aqueous polyurethane resin dispersion has further improved strength.

[Aqueous polyurethane resin dispersion]

The method for producing the aqueous polyurethane resin dispersion of the present invention is not particularly limited, and the dispersion can be produced by, for example, the following method.

The aqueous polyurethane resin dispersion can be produced by a method comprising a step in which, as mentioned above, (a) polyisocyanate compound, (b) polyol compound, (c) acid group-containing polyol compound, with (d) blocking agent are reacted to obtain a polyurethane prepolymer, and then a step in which acid groups in the polyurethane prepolymer are neutralized, a step in which the polyurethane prepolymer is dispersed in an aqueous medium, and a step in which the polyurethane prepolymer is reacted with (B) chain extender to obtain an aqueous polyurethane resin dispersion.

In the above method, the step in which acid groups are neutralized and the step in which the polyurethane prepolymer is dispersed in an aqueous medium may be performed separately or simultaneously.

Further, in the above method, the addition of a chain extender may be performed after or during dispersing the polyurethane prepolymer in an aqueous medium.

Each of the above steps may be performed either in an inert gas atmosphere or in air.

With respect to the aqueous polyurethane resin dispersion of the present invention, it is necessary that the total of the content of urethane bonds and the content of urea bonds in the aqueous polyurethane resin dispersion is necessarily 8 to 13 wt %, preferably 8 to 12 wt %, more preferably 8 to 10.5 wt % based on the solid content. The content of urethane bonds means a content of urethane bond units (-NHCOO-) in the solids of the polyurethane resin, and the content of urea bonds means a content of urea bond units (-NHCONH-) in the solids of the polyurethane resin.

When the total of the content of urethane bonds and the content of urea bonds in the aqueous polyurethane resin dispersion is less than 8 wt %, there is a problem in that, for example, a satisfactory coating film cannot be formed, and the surface of the coating film is sticky even after dried. On the other hand, when the total of the content of urethane bonds and the content of urea bonds in the aqueous polyurethane resin dispersion is more than 13 wt %, a paint or a coating film formed by applying the aqueous polyurethane resin dispersion to a substrate is poor in the redispersibility in an aqueous solvent, and hence is difficult to remove, making it impossible to remove the film and further apply the aqueous polyurethane resin dispersion.

The content of urethane bonds in the aqueous polyurethane resin dispersion is not particularly limited as long as the total of the content of urethane bonds and the content of urea bonds in the aqueous polyurethane resin dispersion is 8 to 13 wt % based on the solid content. The content of urethane bonds in the aqueous polyurethane resin dispersion is preferably 5 to 8 wt %, more preferably 5 to 7 wt % based on the solid content.

The content of urea bonds in the aqueous polyurethane resin dispersion is not particularly limited as long as the total of the content of urethane bonds and the content of urea bonds in the aqueous polyurethane resin dispersion is 8 to 13 wt % based on the solid content. The content of urea bonds in the aqueous polyurethane resin dispersion is preferably 5 wt % or less, more preferably 4.5 wt % or less, further preferably 3 wt % or less based on the solid content.

The content of urethane bonds and the content of urea bonds in the aqueous polyurethane resin dispersion can be calculated from the amounts of the components charged when preparing the aqueous polyurethane resin dispersion. Further, the content of urethane bonds and the content of urea bonds in the aqueous polyurethane resin dispersion can be calculated from an infrared absorption spectrum measured with respect to the coating film formed from the dispersion.

With respect to the aqueous polyurethane resin dispersion of the present invention, it is necessary that the content of carbonate bonds in the aqueous polyurethane resin dispersion is necessarily 15 to 40 wt %, preferably 18 to 35 wt %, especially preferably 20 to 30 wt % based on the solid content. The content of carbonate bonds means a content of carbonate bond units (-OCOO-) in the solids of the polyurethane resin. The content of carbonate bonds in the aqueous polyurethane resin dispersion can be calculated from the amounts of the components charged when preparing the aqueous polyurethane resin dispersion. Further, the content of carbonate bonds in the aqueous polyurethane resin dispersion can be calculated from an infrared absorption spectrum measured with respect to the coating film formed from the dispersion.

When the content of carbonate bonds in the aqueous polyurethane resin dispersion is less than 15 wt %, there is a problem in that the resultant coating film has a small elongation at break so that the coating film is easily affected by an impact. On the other hand, when the content of carbonate bonds in the aqueous polyurethane resin dispersion is more than 40 wt %, there is a problem in that, for example, a satisfactory coating film cannot be formed, and the surface of the coating film is sticky even after dried.

With respect to the aqueous polyurethane resin dispersion of the present invention, it is necessary that the content of isocyanate groups blocked by the blocking agent in the aqueous polyurethane resin dispersion is necessarily 0.3 to 2.0 wt %, more preferably 0.3 to 1.5 wt %, further preferably 0.3 to 1.2 wt %, especially preferably 0.4 to 1.2 wt % based on the solid content and in terms of an isocyanate group. The content of blocked isocyanate groups means a content of blocked isocyanate groups in the solids of the polyurethane resin, calculated in terms of an isocyanate group (-NCO). The content of blocked isocyanate groups in the aqueous polyurethane resin dispersion can be calculated from the amounts of the components charged when preparing the aqueous polyurethane resin dispersion.

When the content of blocked isocyanate groups in the aqueous polyurethane resin dispersion is less than 0.3 wt %, there is a problem in that the resultant coating film has poor adhesion to the surface of an electrodeposition coating plate. On the other hand, when the content of blocked isocyanate groups in the aqueous polyurethane resin dispersion is more than 2.0 wt %, there is a problem in that the resultant coating film has a small elongation at break so that the coating film is easily affected by an impact.

The weight average molecular weight of the polyurethane resin is not particularly limited, and is preferably 20,000 to 100,000, more preferably 20,000 to 80,000, further preferably 20,000 to 60,000, still further preferably 20,000 to less than 55,000, more preferably 25,000 to less than 55,000, especially preferably 30,000 to less than 55,000. When the weight average molecular weight of the polyurethane resin is 20,000 or more, it is likely that the resultant coating film has a large elongation at break so that the coating film has an increased resistance to an impact. On the other hand, when the weight average molecular weight of the polyurethane resin is 100,000 or less, it is likely that a paint or a coating film formed by applying the resultant polyurethane resin dispersion to a substrate is further improved in the redispersibility in an aqueous solvent, and hence is easy to remove, making it easy to remove the film and further apply the aqueous polyurethane resin dispersion.

Especially, when the weight average molecular weight of the polyurethane resin is 20,000 to less than 55,000, it is likely that the resultant coating film has an increased degree of swelling with an aqueous cleaning fluid and hence has further excellent cleaning properties.

Further, the weight average molecular weight of the polyurethane resin is preferably 55,000 to 100,000, more preferably 60,000 to 100,000. When the weight average molecular weight of the polyurethane resin is 55,000 to 100,000, it is likely that the resultant coating film has a reduced degree of swelling with water and hence has further excellent water resistance. Further, it is likely that the formed coating film has an increased elastic modulus and hence has further excellent impact resistance.

In the present invention, the weight average molecular weight is a value, as measured by gel permeation chromatography (GPC), determined from a calibration curve preliminarily prepared using standard polystyrene.

The acid value of the polyurethane resin dispersion is not particularly limited, and is preferably 10 to 30 mg KOH/g, more preferably 13 to 26 mg KOH/g, especially preferably 14 to 20 mg KOH/g. When the acid value of the polyurethane resin dispersion is in the range of from 10 to 30 mg KOH/g, it is likely that the dispersibility in an aqueous medium is further improved.

The polyurethane resin contained in the aqueous polyurethane resin dispersion preferably has an alicyclic structure, more preferably an alicyclic structure derived from a polyisocyanate compound.

When the polyurethane resin has an alicyclic structure, the content of the alicyclic structure in the aqueous polyurethane resin dispersion is not particularly limited. The content of the alicyclic structure in the aqueous polyurethane resin dispersion is preferably 10 to 30 wt %, more preferably 10 to 25 wt %, further preferably 13 to 22 wt %, especially preferably 15 to 20 wt % based on the solid content. When the content of the alicyclic structure in the aqueous polyurethane resin dispersion is 10 wt % or more, it is likely that the resultant coating film is further improved in elastic modulus and hence has a further increased hardness. On the other hand, when the content of the alicyclic structure in the aqueous polyurethane resin dispersion is 30 wt % or less, it is likely that a paint or a coating film formed by applying the resultant aqueous polyurethane resin dispersion to a substrate is further improved in the redispersibility in an aqueous solvent, and hence is easy to remove, making it easy to remove the film and further apply the aqueous polyurethane resin dispersion.

The content of the alicyclic structure in the aqueous polyurethane resin dispersion based on the solid content indicates, for example, in the case where the alicyclic structure is a cyclohexane ring, a content of a portion of the cyclohexane (cyclohexane residue), excluding two hydrogen atoms, present in the solids of the aqueous polyurethane resin dispersion.

[Neutralizing agent]

The aqueous polyurethane resin dispersion of the present invention preferably contains a neutralizing agent for neutralizing at least part of acid groups of the polyurethane resin. The neutralizing agent is used for neutralizing, for example, at least part of acid groups of the polyurethane prepolymer to disperse the polyurethane prepolymer in an aqueous medium. It is preferred that the aqueous polyurethane resin dispersion is obtained by reacting the polyurethane prepolymer dispersed in an aqueous medium with a chain extender.

Examples of the neutralizing agents include organic amines, such as trimethylamine, triethylamine, tri-n-propylamine, tributylamine, triethanolamine, aminomethylpropanol, aminomethylpropanediol, aminoethylpropanediol, trihydroxymethylaminomethane, monoethanolamine, and triisopropanolamine; inorganic alkali salts, such as potassium hydroxide and sodium hydroxide; and ammonia. These may be used alone or as a combination of plural types thereof.

Among the neutralizing agents, from the viewpoint of the operating properties, organic amines are preferred, and more preferred is triethylamine.

The amount of the neutralizing agent added is, relative to 1 equivalent of the acid group, for example, 0.4 to 1.2 equivalent, preferably 0.6 to 1.0 equivalent.

[Optional component]

In the aqueous polyurethane resin dispersion of the present invention, as an optional component, an aminoalcohol, a monoalcohol, and a monoamine can be used. For example, when (A) polyurethane prepolymer in the state of being dispersed in water and an aminoalcohol are reacted with each other, the polyurethane prepolymer contains a hydroxyl group at the end of the molecule thereof. Thus, the hydroxyl group is reacted with an isocyanate group, which is generated by being deblocked when the coating film formed from the dispersion is dried by heating, enabling a chain extension. The use of an aminoalcohol is effective in appropriately selecting the degree of crosslinking to control the elastic modulus of the coating film. When an aminoalcohol is added as an optional component, the amount of the aminoalcohol added to the aqueous polyurethane resin dispersion is preferably less than 2 wt %, more preferably less than 1 wt % based on the solid content. Examples of aminoalcohols include ethanolamine, butanolamine, and hexanolamine, and, from the viewpoint of the dispersibility in water, preferred is ethanolamine.

When a monoalcohol or a monoamine is used as an optional component, the polyurethane prepolymer has a nonreactive end of the molecule thereof, so that the degree of crosslinking can be appropriately adjusted, making it possible to control the coating film in elastic modulus. When an alcohol or a monoamine is added as an optional component, the amount of the monoalcohol or monoamine added to the aqueous polyurethane resin is preferably less than 2 wt %, more preferably less than 1 wt % based on the solid content. Examples of monoalcohols include ethanol, n-propanol, isopropanol, n-butanol, hexanol, and octanol, and, from the viewpoint of facilitating the preparation, more preferred is n-butanol. Examples of monoamines include ethylamine, n-propylamine, isopropylamine, n-butylamine, and n-hexylamine.

From the viewpoint of the reactivity, a monoalcohol is preferably used when producing (A) polyurethane prepolymer. A monoamine is preferably used after dispersing (A) polyurethane prepolymer in an aqueous medium, and is preferably used before adding (B) chain extender.

When the monoalcohol is added, from the viewpoint of improving the reaction rate, it is preferred that the monoalcohol is reacted under conditions heated to 60°C or higher. When the monoamine is added, from the viewpoint of inhibiting a side reaction, it is preferred that the monoamine is reacted under conditions at 60°C or lower.

[Aqueous medium]

In the present invention, the polyurethane resin is dispersed in an aqueous medium. Examples of aqueous media include water, and a mixed medium of water and a hydrophilic organic solvent.

Examples of the waters include tap water, ion-exchanged water, distilled water, and ultrapure water, and preferred is ion-exchanged water taking into consideration the easy availability and the adverse effect of salts on the polyurethane resin particles.

Examples of the hydrophilic organic solvents include lower monohydric alcohols, such as methanol, ethanol, and propanol; polyhydric alcohols, such as ethylene glycol and glycerol; and aprotic hydrophilic organic solvents, such as N-methylmorpholine, dimethyl sulfoxide, dimethylformamide, N-methylpyrrolidone, N-ethylpyrrolidone, dipropylene glycol dimethyl ether (DMM), and β-alkoxypropionic acid amide.

The amount of the hydrophilic organic solvent in the aqueous medium is preferably 0 to 20 wt %.

A coating film obtained by applying the aqueous polyurethane resin dispersion of the present invention has excellent water resistance and excellent solvent resistance as well as excellent adhesion to an electrodeposition coating.

There are electrodeposition coatings of two types, i.e., of an anionic type and a cationic type. Generally, a cationic type electrodeposition coating uses a modified epoxy resin as a substrate resin and causes crosslinking with an isocyanate, whereas, an anionic type electrodeposition coating causes crosslinking using an oxidative polymerization. The cationic type electrodeposition coating has remaining secondary hydroxyl groups generated due to ring opening of an epoxy group, and the anionic type electrodeposition coating has carboxyl groups introduced thereinto, and therefore, it is presumed that these groups cause a crosslinking reaction together with free isocyanate groups which result from dissociation of the blocking agent in the heating and drying step for the aqueous polyurethane resin dispersion of the present invention. Such an electrodeposition coating is used in, for example, industrial machines, such as heavy machines and agricultural machinery, vehicles, such as an automobile and a bicycle, building materials, such as prefab skeletons, a fire door, and a sash, and electric appliances, such as a distribution board, an elevator, and a microwave oven.

The aqueous polyurethane resin dispersion of the present invention can be applied onto, for example, a substrate having formed thereon the above-mentioned electrodeposition coating using, e.g., an application apparatus, and baked at a temperature of 80 to 250°C. A drying step can be provided before the baking step. A procedure can be performed in which the aqueous polyurethane resin dispersion is applied and dried and, for example, another paint is applied thereto and dried and then, all the resultant layers are baked at once.

By baking the applied aqueous polyurethane resin dispersion, dissociation of the blocking agent for blocked isocyanate group is facilitated to form a crosslinked structure with acid groups and other isocyanate groups, making it possible to form a coating film having stronger adhesion and higher hardness.

In each of the baking step and the drying step, a general method can be employed.

[Coating material composition]

With respect to the coating material composition of the present invention, the above-described aqueous polyurethane resin dispersion may be used as such, or a coating material composition may be prepared by further adding an additive to the aqueous polyurethane resin dispersion.

Examples of the additives include a plasticizer, an anti-foaming agent, a leveling agent, a mildewproofing agent, a rust preventive agent, a matting agent, a flame retardant, a tackifier, a thixotropic agent, a lubricant, an antistatic agent, a thinner, a thickener, a diluent, a pigment, a die, an ultraviolet light absorber, a light stabilizer, an antioxidant, and a filler.

The coating material composition of the present invention can be applied to coating (coating film formation) on various types of substrates, such as a metal, a ceramic, a synthetic resin, nonwoven fabric, woven fabric, knitted fabric, and paper.

[Polyurethane resin film]

The polyurethane resin film of the present invention (hereinafter, referred to also as "polyurethane film") is produced by drying a composition comprising the aqueous polyurethane resin dispersion by heating it.

With respect to the composition comprising the aqueous polyurethane resin dispersion, the above-described aqueous polyurethane resin dispersion may be used as such, or a composition prepared by adding an additive to the aqueous polyurethane resin dispersion may be used.

Examples of the additives include a plasticizer, an anti-foaming agent, a leveling agent, a mildewproofing agent, a rust preventive agent, a matting agent, a flame retardant, a tackifier, a thixotropic agent, a lubricant, an antistatic agent, a thinner, a thickener, a diluent, a pigment, a die, an ultraviolet light absorber, a light stabilizer, an antioxidant, and a filler.

The method for producing the polyurethane resin film is not particularly limited. For example, there can be mentioned a method in which the above-mentioned aqueous polyurethane resin dispersion is applied onto a releasing substrate using an application apparatus, and then dried and the resultant polyurethane resin film is peeled off the releasing substrate.

The releasing substrate is not particularly limited, and include, for example, a glass substrate, a plastic substrate comprised of, e.g., polyethylene terephthalate or polytetrafluoroethylene, and a metal substrate. The releasing substrate is obtained by treating the surface of each substrate with a releasing agent.

The application apparatus is not particularly limited, and include, for example, a bar coater, a roll coater, a gravure roll coater, and an air spray.

The thickness of the polyurethane resin film of the present invention is not particularly limited, and is preferably 0.01 to 0.5 mm.

EXAMPLES

Hereinbelow, the present invention will be described in more detail with reference to the following Examples and Comparative Examples.

The physical properties were measured by the following methods.

(1) Hydroxyl value: A hydroxyl value was measured in accordance with the method of JIS K 1557-B.

(2) Free isocyanate group content: After completion of the urethane-forming reaction, 0.5 g of the reaction mixture was weighed out, and added to a mixture of 10 mL of 0.1 mol/L (liter) tetrahydrofuran (THF) dibutylamine solution and 20 mL of THF to effect a reaction, followed by titration for the unconsumed dibutylamine using 0.1 mol/L hydrochloric acid. From a difference between the obtained titer and a blank test titer, a molar concentration of the isocyanate groups remaining in the reaction mixture was calculated. The obtained molar concentration was converted to a weight percentage of the isocyanate groups, which was taken as a free isocyanate group content. The indicator used in the titration is Bromophenol Blue.

(3) Acid value: 100 g of the aqueous polyurethane resin dispersion was diluted with pure water so that the weight of the resultant mixture increased tenfold, and 10 g of acetic acid was mixed into the resultant mixture and stirred at room temperature. The deposited solids were collected by filtration using a 120-mesh stainless steel wire screen. 600 g of water was poured into the obtained solids, and the resultant mixture was stirred at room temperature for 30 minutes and allowed to stand and then, the solids were collected by filtration using a 120-mesh stainless steel wire screen. The similar operation was repeated 5 times. The remaining solids were dried at 60°C for 24 hours, and then subjected to measurement of an acid value in accordance with the indicator titration method described in JIS K 1557.

(4) The content of urethane bonds in the aqueous polyurethane resin dispersion based on the solid content (urethane bond content) and the content of urea bonds in the aqueous polyurethane resin dispersion based on the solid content (urea bond content) were expressed in respective weight percentages which are converted from, respectively, the molar concentrations (mol/g) of urethane bonds and urea bonds calculated from the amounts of the charged raw materials for the aqueous polyurethane resin dispersion. The weight percentage was determined based on the weight of the solids of the aqueous polyurethane resin dispersion. 0.3 g of the aqueous polyurethane resin dispersion was applied onto a glass substrate so that the thickness of the applied dispersion became 0.2 mm, and dried by heating at 140°C for 4 hours, and then the weight of the remaining dried material was measured. A value obtained by dividing the measured weight of the dried material by the weight of the dispersion before being dried was determined as a solids content. The product of the weight of the aqueous polyurethane resin dispersion and the solids content was taken as the weight of the solids, and the weight percentage was calculated using the weight of the solids.

(5) The content of carbonate bonds in the aqueous polyurethane resin dispersion based on the solid content (carbonate bond content) was expressed in a weight percentage which is converted from the molar concentration (mol/g) of carbonate bonds calculated from the amounts of the charged raw materials for the aqueous polyurethane resin dispersion. The weight percentage was determined based on the weight of the solids of the aqueous polyurethane resin dispersion, and calculated by the same method as mentioned above in connection with the urethane bond content.

(6) The content of the alicyclic structure in the aqueous polyurethane resin dispersion based on the solid content (alicyclic structure content) was expressed in a weight percentage of the alicyclic structure calculated from the amounts of the charged raw materials for the aqueous polyurethane resin dispersion. The weight percentage was determined based on the weight of the solids of the aqueous polyurethane resin dispersion, and calculated by the same method as mentioned above in connection with the urethane bond content.

(7) The weight average molecular weight of the polyurethane resin in the aqueous polyurethane resin dispersion was a value, as measured by gel permeation chromatography (GPC), determined from a calibration curve preliminarily prepared using standard polystyrene.

(8) The content of isocyanate groups wherein the blocking agent is bonded thereto in the aqueous polyurethane resin dispersion based on the solid content (blocked NCO content, in terms of an isocyanate group) was expressed in a value obtained by dividing the weight of isocyanate groups, which is converted from the molar amount of the charged blocking agent, by the weight of the solid of the aqueous polyurethane resin dispersion. The weight of the solids of the aqueous polyurethane resin dispersion was calculated by the same method as mentioned above in connection with the urethane bond content.

(9) The content of the alkanedioic dihydrazide in the aqueous polyurethane resin dispersion based on the solid content (alkanedioic dihydrazide content) was expressed in a weight percentage of the alkanedioic dihydrazide calculated from the amounts of the charged raw materials for the aqueous polyurethane resin dispersion. The weight percentage was determined based on the weight of the solids of the aqueous polyurethane resin dispersion, and calculated by the same method as mentioned above in connection with the urethane bond content.

(10) The content of the alkylenediamine in the aqueous polyurethane resin dispersion based on the solid content (alkylenediamine content) was expressed in a weight percentage of the alkylenediamine calculated from the amounts of the charged raw materials for the aqueous polyurethane resin dispersion. The weight percentage was determined based on the weight of the solids of the aqueous polyurethane resin dispersion, and calculated by the same method as mentioned above in connection with the urethane bond content.

(11) Degree of swelling of the coating film with water: 0.3 mL of the aqueous polyurethane resin dispersion was applied onto a glass plate so that the thickness of the applied dispersion became 72 $\mu$m (bar coater #36), and dried by heating at 50°C until the resultant coating film had a solids content of 90%. The obtained coating film was immersed in ion-exchanged water at 28°C for 6 hours, and weights of the coating film before and after the immersion in water were measured. A degree of swelling of the coating film with water was calculated using the formula below. The solids content of the dried coating film was calculated by the same method as mentioned above in connection with the urethane bond content.

$$(\text{Degree of swelling}) = [(\text{Weight of the coating film after immersion in water}) - (\text{Original weight of the coating film before immersion in water})]/(\text{Original weight of the coating film before immersion in water}) \times 100$$

(12) Degree of swelling of the dried coating film with an aqueous cleaning fluid: An aqueous cleaning fluid containing butyl cellosolve, isopropanol, dimethylethanolamine, and ion-exchanged water in respective amounts of 5%, 4%, 1%, and 90%, each of which is given by weight, was prepared. 0.3 mL of the aqueous polyurethane resin dispersion was applied onto a glass plate so that the thickness of the applied dispersion became 72 $\mu$m (bar coater #36), and dried by heating at 50°C until the resultant coating film had a solids content of 90%. The obtained coating film was immersed in the aqueous cleaning fluid at 28°C for 15 seconds, and weights of the coating film before and after the immersion in the cleaning fluid were measured. A degree of swelling of the coating film with the aqueous cleaning fluid was calculated using the formula below. The solids content of the dried coating film was calculated by the same method as mentioned above in connection with the urethane bond content.

$$(\text{Degree of swelling}) = [(\text{Weight of the coating film after immersion in the aqueous cleaning fluid}) - (\text{Original weight of the coating film before immersion in the aqueous cleaning fluid})]/(\text{Original weight of the coating film before immersion in the aqueous cleaning fluid}) \times 100$$

(13) An elastic modulus, a tensile strength, and an elongation at break of the polyurethane resin film were measured in accordance with the method described in JIS K 7311. Conditions for the measurement were such that the measurement temperature was 23°C, the humidity was 50%, and the rate of pulling was 100 mm/minute.

(14) The breaking energy was determined by integrating stresses at from zero elongation to the elongation at break in an elongation-stress curve.

(15) The adhesion to the surface of an electrodeposition layer (electrodeposition coating) was evaluated as follows. The aqueous polyurethane resin dispersion was applied onto a cationic electrodeposition coating for car steel plate (manufactured by Nippon Testpanel Co., Ltd.) so that the thickness of the applied dispersion became 0.2 mm, and dried by heating at 120°C for 3 hours and at 140°C for 30 minutes. Using the resultant coating film, a lattice pattern cutting test was performed. Vertical and horizontal lines at intervals of 1 mm were cut in the coating film at a 5 mm x 5 mm area so as to form a lattice pattern, and an adhesive tape was put on the resultant lattice pattern, and then peeled off, whereupon the number of the squares remaining on the surface of the electrodeposition layer was visually measured to evaluate the adhesion. For example, when 15 squares remained among the 25 squares, indication "15/25" was shown.

[Example 1]

[Preparation of aqueous polyurethane resin dispersion (1)]

To a reaction vessel having a stirrer, a reflux condenser, and a thermometer inserted thereinto were charged 301 g of ETERNACOLL UH-200 (registered trademark; polycarbonate diol, manufactured by Ube Industries, Ltd.; number average molecular weight: 2,011; hydroxyl value: 55.8 mg KOH/g; polycarbonate diol obtained by reacting 1,6-hexanediol with dimethyl carbonate), 21.5 g of 2,2-dimethylolpropionic acid (DMPA), and 153 g of N-methylpyrrolidone (NMP) under a stream of nitrogen gas. 138 g of 4,4'-dicyclohexylmethane diisocyanate (hydrogenated MDI) and 0.35 g of dibutyltin dilaurate (catalyst) were added to the reaction vessel, and the resultant mixture was heated to 90°C to effect an urethane-forming reaction for 5 hours. Then, 11.4 g of 3,5-dimethylpyrazole (DMPZ) was charged into the vessel, and the resultant mixture was stirred at the same temperature for 1.5 hour to obtain a polyurethane prepolymer. At the time of completion of the urethane-forming reaction, the free NCO group content was 1.88 wt %. 16.1 g of triethylamine was added to and mixed into the reaction mixture, and 610 g of the resultant mixture was withdrawn and poured into 920 g of water while stirring at a high speed. Then, 22.9 g of adipic dihydrazide (ADH) was added to the mixture to effect a chain extension reaction, obtaining an aqueous polyurethane resin dispersion. With respect to the obtained aqueous polyurethane resin dispersion (1), the content of urethane bonds, the content of urea bonds, the content of carbonate bonds, the weight average molecular weight, the content of the alicyclic structure, the acid value, the content of the alkanedioic dihydrazide, the content of the alkylenediamine, and the content of blocked isocyanate groups (in terms of an isocyanate group) are shown in Table 1. With respect to the coating film formed from aqueous polyurethane resin dispersion (1), the degree of swelling with water, the degree of swelling with the cleaning fluid, and the result of the test of adhesion to the electrodeposition surface are shown in Table 2.

[Preparation of polyurethane film (A)]

Aqueous polyurethane resin dispersion (1) was applied as a coating material composition to a glass plate, and dried at 120°C for 3 hours and at 140°C for 30 minutes to obtain an excellent coating layer. The obtained coating layer was peeled off to prepare polyurethane film (A). The obtained polyurethane film (A) has a thickness of 0.15 mm, and the tensile properties of the film are shown in Table 2.

[Example 2]

[Preparation of aqueous polyurethane resin dispersion (2)]

To the same reaction vessel as used in Example 1 were charged 304 g of ETERNACOLL UH-200 (registered trademark; polycarbonate diol, manufactured by Ube Industries, Ltd.; number average molecular weight: 1,993; hydroxyl value: 56.3 mg KOH/g; polycarbonate diol obtained by reacting 1,6-hexanediol with dimethyl carbonate), 18.6 g of 2,2-dimethylolpropionic acid (DMPA), and 154 g of N-methylpyrrolidone (NMP) under a stream of nitrogen gas. 131 g of 4,4'-dicyclohexylmethane diisocyanate (hydrogenated MDI) and 0.37 g of dibutyltin dilaurate (catalyst) were added to the reaction vessel, and the resultant mixture was heated to 90°C to effect an urethane-forming reaction for 5 hours. Then, 11.0 g of 3,5-dimethylpyrazole (DMPZ) was charged into the vessel, and the resultant mixture was stirred at the same temperature for 1.5 hour to obtain a polyurethane prepolymer. At the time of completion of the urethane-forming reaction, the free NCO group content was 1.78 wt %. 15.6 g of triethylamine was added to and mixed into the reaction mixture, and 590 g of the resultant mixture was withdrawn and poured into 850 g of water while stirring at a high speed. Then, 20.9 g of adipic dihydrazide (ADH) was added to the mixture to effect a chain extension reaction, obtaining an aqueous polyurethane resin dispersion. With respect to the obtained aqueous polyurethane resin dispersion (2), the content of urethane bonds, the content of urea bonds, the content of carbonate bonds, the weight average molecular weight, the content of the alicyclic structure, the acid value, the content of the alkanedioic dihydrazide, the content of the alkylenediamine, and the content of blocked isocyanate groups (in terms of an isocyanate group) are shown in Table 1. With respect to the coating film formed from aqueous polyurethane resin dispersion (2), the degree of swelling with water, the degree of swelling with the cleaning fluid, and the result of the test of adhesion to the electrodeposition surface are shown in Table 2.

[Preparation of polyurethane film (B)]

Aqueous polyurethane resin dispersion (2) was applied as a coating material composition to a glass plate, and dried at 120°C for 3 hours and at 140°C for 30 minutes to obtain an excellent coating layer. The obtained coating layer was peeled off to prepare polyurethane film (B). The obtained polyurethane film (B) has a thickness of 0.15 mm, and the tensile properties of the film are shown in Table 2.

[Example 3]

[Preparation of aqueous polyurethane resin dispersion (3)]

To the same reaction vessel as used in Example 1 were charged 150 g of ETERNACOLL UH-200 (registered trademark; polycarbonate diol, manufactured by Ube Industries, Ltd.; number average molecular weight: 1,993; hydroxyl value: 56.3 mg KOH/g; polycarbonate diol obtained by reacting 1,6-hexanediol with dimethyl carbonate), 150 g of ETERNACOLL UH-300 (registered trademark; polycarbonate diol, manufactured by Ube Industries, Ltd.; number average molecular weight: 2,906; hydroxyl value: 38.6 mg KOH/g; polycarbonate diol obtained by reacting 1,6-hexanediol with dimethyl carbonate), 20.9 g of 2,2-dimethylolpropionic acid (DMPA), and 147 g of N-methylpyrrolidone (NMP) under a stream of nitrogen gas. 129 g of 4,4'-dicyclohexylmethane diisocyanate (hydrogenated MDI) and 0.34 g of dibutyltin dilaurate (catalyst) were added to the reaction vessel, and the resultant mixture was heated to 90°C to effect an urethane-forming reaction for 5 hours. Then, 10.3 g of 3,5-dimethylpyrazole (DMPZ) was charged into the vessel, and the resultant mixture was stirred at the same temperature for 1.5 hour to obtain a polyurethane prepolymer. At the time of completion of the urethane-forming reaction, the free NCO group content was 1.73 wt %. 17.1 g of triethylamine was added to and mixed into the reaction mixture, and 570 g of the resultant mixture was withdrawn and poured into 860 g of water while stirring at a high speed. Then, 19.5 g of adipic dihydrazide (ADH) was added to the mixture to effect a chain extension reaction, obtaining an aqueous polyurethane resin dispersion. With respect to the obtained aqueous polyurethane resin dispersion (3), the content of urethane bonds, the content of urea bonds, the content of carbonate bonds, the weight average molecular weight, the content of the alicyclic structure, the acid value, the content of the alkanedioic dihydrazide, the content of the alkylenediamine, and the content of blocked isocyanate groups (in terms of an isocyanate group) are shown in Table 1. With respect to the coating film formed from aqueous polyurethane resin dispersion (3), the degree of swelling with water, the degree of swelling with the cleaning fluid, and the result of the test of adhesion to the electrodeposition surface are shown in Table 2.

[Preparation of polyurethane film (C)]

Aqueous polyurethane resin dispersion (3) was applied as a coating material composition to a glass plate, and dried at 120°C for 3 hours and at 140°C for 30 minutes to obtain an excellent coating layer. The obtained coating layer was peeled off to prepare polyurethane film (C). The obtained polyurethane film (C) has a thickness of 0.15 mm, and the tensile properties of the film are shown in Table 2.

[Example 4]

[Preparation of aqueous polyurethane resin dispersion (4)]

To the same reaction vessel as used in Example 1 were charged 518 g of ETERNACOLL UH-200 (registered trademark; polycarbonate diol, manufactured by Ube Industries, Ltd.; number average molecular weight: 2,007; hydroxyl value: 55.9 mg KOH/g; polycarbonate diol obtained by reacting 1,6-hexanediol with dimethyl carbonate), 37.6 g of 2,2-dimethylolpropionic acid (DMPA), and 236 g of N-methylpyrrolidone (NMP) under a stream of nitrogen gas. 240 g of 4,4'-dicyclohexylmethane diisocyanate (hydrogenated MDI) and 0.63 g of dibutyltin dilaurate (catalyst) were added to the reaction vessel, and the resultant mixture was heated to 90°C to effect an urethane-forming reaction for 5 hours. Then, 8.14 g of 3,5-dimethylpyrazole (DMPZ) was charged into the vessel, and the resultant mixture was stirred at the same temperature for 1.5 hour to obtain a polyurethane prepolymer. At the time of completion of the urethane-forming reaction, the free NCO group content was 2.51 wt %. 28.3 g of triethylamine was added to and mixed into the reaction mixture, and 997 g of the resultant mixture was withdrawn and poured into 1,600 g of water while stirring at a high speed. Then, 48.1 g of adipic dihydrazide (ADH) was added to the mixture to effect a chain extension reaction, obtaining an aqueous polyurethane resin dispersion. With respect to the obtained aqueous polyurethane resin dispersion (4), the content of urethane bonds, the content of urea bonds, the content of carbonate bonds, the weight average molecular weight, the content of the alicyclic structure, the acid value, the content of the alkanedioic dihydrazide, the content of the alkylenediamine, and the content of blocked isocyanate groups (in terms of an isocyanate group) are shown in Table 1. With respect to the coating film formed from aqueous polyurethane resin dispersion (4), the degree of swelling with water, the degree of swelling with the cleaning fluid, and the result of the test of adhesion to the electrodeposition surface are shown in Table 2.

[Preparation of polyurethane film (D)]

Aqueous polyurethane resin dispersion (4) was applied as a coating material composition to a glass plate, and dried at 120°C for 3 hours and at 140°C for 30 minutes to obtain an excellent coating layer. The obtained coating layer was peeled off to prepare polyurethane film (D). The obtained polyurethane film (D) has a thickness of 0.15 mm, and the tensile properties of the film are shown in Table 2.

[Example 5]

[Preparation of aqueous polyurethane resin dispersion (5)]

To the same reaction vessel as used in Example 1 were charged 330 g of ETERNACOLL UH-300 (registered trademark; polycarbonate diol, manufactured by Ube Industries, Ltd.; number average molecular weight: 2,906; hydroxyl value: 38.6 mg KOH/g; polycarbonate diol obtained by reacting 1,6-hexanediol with dimethyl carbonate), 22.1 g of 2,2-dimethylolpropionic acid (DMPA), and 165 g of N-methylpyrrolidone (NMP) under a stream of nitrogen gas. 123 g of 4,4'-dicyclohexylmethane diisocyanate (hydrogenated MDI) and 0.41 g of dibutyltin dilaurate (catalyst) were added to the reaction vessel, and the resultant mixture was heated to 90°C to effect an urethane-forming reaction for 5 hours. Then, 4.82 g of 3,5-dimethylpyrazole (DMPZ) was charged into the vessel, and the resultant mixture was stirred at the same temperature for 1.5 hour to obtain a polyurethane prepolymer. At the time of completion of the urethane-forming reaction, the free NCO group content was 2.15 wt %. 16.5 g of triethylamine was added to and mixed into the reaction mixture, and 592 g of the resultant mixture was withdrawn and poured into 890 g of water while stirring at a high speed. Then, 24.5 g of adipic dihydrazide (ADH) was added to the mixture to effect a chain extension reaction, obtaining an aqueous polyurethane resin dispersion. With respect to the obtained aqueous polyurethane resin dispersion (5), the content of urethane bonds, the content of urea bonds, the content of carbonate bonds, the weight average molecular weight, the content of the alicyclic structure, the acid value, the content of the alkanedioic dihydrazide, the content of the alkylenediamine, and the content of blocked isocyanate groups (in terms of an isocyanate group) are shown in Table 1. With respect to the coating film formed from aqueous polyurethane resin dispersion (5), the degree of swelling with water, the degree of swelling with the cleaning fluid, and the result of the test of adhesion to the electrodeposition surface are shown in Table 2.

[Preparation of polyurethane film (E)]

Aqueous polyurethane resin dispersion (5) was applied as a coating material composition to a glass plate, and dried at 120°C for 3 hours and at 140°C for 30 minutes to obtain an excellent coating layer. The obtained coating layer was peeled off to prepare polyurethane film (E). The obtained polyurethane film (E) has a thickness of 0.15 mm, and the tensile properties of the film are shown in Table 2.

[Example 6]

[Preparation of aqueous polyurethane resin dispersion (6)]

To the same reaction vessel as used in Example 1 were charged 139 g of ETERNACOLL UH-200 (registered trademark; polycarbonate diol, manufactured by Ube Industries, Ltd.; number average molecular weight: 2,007; hydroxyl value: 55.9 mg KOH/g; polycarbonate diol obtained by reacting 1,6-hexanediol with dimethyl carbonate), 201 g of ETERNACOLL UH-300 (registered trademark; polycarbonate diol, manufactured by Ube Industries, Ltd.; number average molecular weight: 2,906; hydroxyl value: 38.6 mg KOH/g; polycarbonate diol obtained by reacting 1,6-hexanediol with dimethyl carbonate), 24.3 g of 2,2-dimethylolpropionic acid (DMPA), and 163 g of N-methylpyrrolidone (NMP) under a stream of nitrogen gas. 143 g of 4,4'-dicyclohexylmethane diisocyanate (hydrogenated MDI) and 0.41 g of dibutyltin dilaurate (catalyst) were added to the reaction vessel, and the resultant mixture was heated to 90°C to effect an urethane-forming reaction for 5 hours. Then, 5.26 g of 3,5-dimethylpyrazole (DMPZ) was charged into the vessel, and the resultant mixture was stirred at the same temperature for 1.5 hour to obtain a polyurethane prepolymer. At the time of completion of the urethane-forming reaction, the free NCO group content was 2.27 wt %. 19.0 g of triethylamine was added to and mixed into the reaction mixture, and 644 g of the resultant mixture was withdrawn and poured into 980 g of water while stirring at a high speed. Then, 28.0 g of adipic dihydrazide (ADH) was added to the mixture to effect a chain extension reaction, obtaining an aqueous polyurethane resin dispersion. With respect to the obtained aqueous polyurethane resin dispersion (6), the content of urethane bonds, the content of urea bonds, the content of carbonate bonds, the weight average molecular weight, the content of the alicyclic structure, the acid value, the content of the alkanedioic dihydrazide, the content of the alkylenediamine, and the content of blocked isocyanate groups (in terms of an isocyanate group) are shown in Table 1. With respect to the coating film formed from aqueous polyurethane resin dispersion (6), the degree of swelling with water, the degree of swelling with the cleaning fluid, and the result of the test of adhesion to the electrodeposition surface are shown in Table 2.

[Preparation of polyurethane film (F)]

Aqueous polyurethane resin dispersion (6) was applied as a coating material composition to a glass plate, and dried at 120°C for 3 hours and at 140°C for 30 minutes to obtain an excellent coating layer. The obtained coating layer was peeled off to prepare polyurethane film (F). The obtained polyurethane film (F) has a thickness of 0.15 mm, and the tensile properties of the film are shown in Table 2.

[Example 7]

[Preparation of aqueous polyurethane resin dispersion (7)]

To the same reaction vessel as used in Example 1 were charged 305 g of ETERNACOLL UH-300 (registered trademark; polycarbonate diol, manufactured by Ube Industries, Ltd.; number average molecular weight: 2,906; hydroxyl value: 38.6 mg KOH/g; polycarbonate diol obtained by reacting 1,6-hexanediol with dimethyl carbonate), 20.8 g of 2,2-dimethylolpropionic acid (DMPA), and 151 g of N-methylpyrrolidone (NMP) under a stream of nitrogen gas. 115 g of 4,4'-dicyclohexylmethane diisocyanate (hydrogenated MDI) and 0.36 g of dibutyltin dilaurate (catalyst) were added to the reaction vessel, and the resultant mixture was heated to 90°C to effect an urethane-forming reaction for 5 hours. Then, 4.51 g of 3,5-dimethylpyrazole (DMPZ) and 4.85 g of methyl ethyl ketone oxime (MEKO) were charged into the vessel, and the resultant mixture was stirred at the same temperature for 1.5 hour to obtain a polyurethane prepolymer. At the time of completion of the urethane-forming reaction, the free NCO group content was 1.68 wt %. 15.8 g of triethylamine was added to and mixed into the reaction mixture, and 571 g of the resultant mixture was withdrawn and poured into 830 g of water while stirring at a high speed. Then, 18.1 g of adipic dihydrazide (ADH) was added to the mixture to effect a chain extension reaction, obtaining an aqueous polyurethane resin dispersion. With respect to the obtained aqueous polyurethane resin dispersion (7), the content of urethane bonds, the content of urea bonds, the content of carbonate bonds, the weight average molecular weight, the content of the alicyclic structure, the acid value, the content of the alkanedioic dihydrazide, the content of the alkylenediamine, and the content of blocked isocyanate groups (in terms of an isocyanate group) are shown in Table 1. With respect to the coating film formed from aqueous polyurethane resin dispersion (7), the degree of swelling with water, the degree of swelling with the cleaning fluid, and the result of the test of adhesion to the electrodeposition surface are shown in Table 2.

[Preparation of polyurethane film (G)]

Aqueous polyurethane resin dispersion (7) was applied as a coating material composition to a glass plate, and dried at 120°C for 3 hours and at 140°C for 30 minutes to obtain an excellent coating layer. The obtained coating layer was peeled off to prepare polyurethane film (G). The obtained polyurethane film (G) has a thickness of 0.15 mm, and the tensile properties of the film are shown in Table 2.

[Example 8]

[Preparation of aqueous polyurethane resin dispersion (8)]

To the same reaction vessel as used in Example 1 were charged 492 g of ETERNACOLL UH-200 (registered trademark; polycarbonate diol, manufactured by Ube Industries, Ltd.; number average molecular weight: 2,004; hydroxyl value: 56.0 mg KOH/g; polycarbonate diol obtained by reacting 1,6-hexanediol with dimethyl carbonate), 34.8 g of 2,2-dimethylolpropionic acid (DMPA), and 247 g of N-methylpyrrolidone (NMP) under a stream of nitrogen gas. 226 g of 4,4'-dicyclohexylmethane diisocyanate (hydrogenated MDI) and 0.58 g of dibutyltin dilaurate (catalyst) were added to the reaction vessel, and the resultant mixture was heated to 90°C to effect an urethane-forming reaction for 5 hours. Then, 7.87 g of 3,5-dimethylpyrazole (DMPZ) was charged into the vessel, and the resultant mixture was stirred at the same temperature for 1.5 hour to obtain a polyurethane prepolymer. At the time of completion of the urethane-forming reaction, the free NCO group content was 2.32 wt %. 25.8 g of triethylamine was added to and mixed into the reaction mixture, and 985 g of the resultant mixture was withdrawn and poured into 1,440 g of water while stirring at a high speed. 66.4 g of 35 wt % aqueous 2-methyl-1,5-pentanediamine (MPMD) solution was added to the mixture, and then 8.52 g of adipic dihydrazide (ADH) was added to effect a chain extension reaction, obtaining an aqueous polyurethane resin dispersion. With respect to the obtained aqueous polyurethane resin dispersion (8), the content of urethane bonds, the content of urea bonds, the content of carbonate bonds, the weight average molecular weight, the content of the alicyclic structure, the acid value, the content of the alkanedioic dihydrazide, the content of the alkylenediamine, and the content of blocked isocyanate groups (in terms of an isocyanate group) are shown in Table 1. With respect to the coating film formed from aqueous polyurethane resin dispersion (8), the degree of swelling with water, the degree of swelling with the cleaning fluid, and the result of the test of adhesion to the electrodeposition surface are shown in Table 2.

[Preparation of polyurethane film (H)]

Aqueous polyurethane resin dispersion (8) was applied as a coating material composition to a glass plate, and dried at 120°C for 3 hours and at 140°C for 30 minutes to obtain an excellent coating layer. The obtained coating layer was peeled off to prepare polyurethane film (H). The obtained polyurethane film (H) has a thickness of 0.15 mm, and the tensile properties of the film are shown in Table 2.

[Example 9]

[Preparation of aqueous polyurethane resin dispersion (9)]

To the same reaction vessel as used in Example 1 were charged 490 g of ETERNACOLL UH-200 (registered trademark; polycarbonate diol, manufactured by Ube Industries, Ltd.; number average molecular weight: 2,014; hydroxyl value: 55.7 mg KOH/g; polycarbonate diol obtained by reacting 1,6-hexanediol with dimethyl carbonate), 33.9 g of 2,2-dimethylolpropionic acid (DMPA), and 247 g of N-methylpyrrolidone (NMP) under a stream of nitrogen gas. 223 g of 4,4'-dicyclohexylmethane diisocyanate (hydrogenated MDI) and 0.56 g of dibutyltin dilaurate (catalyst) were added to the reaction vessel, and the resultant mixture was heated to 90°C to effect an urethane-forming reaction for 5 hours. Then, 18.8 g of 3,5-dimethylpyrazole (DMPZ) was charged into the vessel, and the resultant mixture was stirred at the same temperature for 1.5 hour to obtain a polyurethane prepolymer. At the time of completion of the urethane-forming reaction, the free NCO group content was 1.84 wt %. 25.8 g of triethylamine was added to and mixed into the reaction mixture, and 1,000 g of the resultant mixture was withdrawn and poured into 1,400 g of water while stirring at a high speed. 51.9 g of 35 wt % aqueous 2-methyl-1,5-pentanediamine (MPMD) solution was added to the mixture, and then 6.57 g of adipic dihydrazide (ADH) was added to effect a chain extension reaction, obtaining an aqueous polyurethane resin dispersion. With respect to the obtained aqueous polyurethane resin dispersion (9), the content of urethane bonds, the content of urea bonds, the content of carbonate bonds, the weight average molecular weight, the content of the alicyclic structure, the acid value, the content of the alkanedioic dihydrazide, the content of the alkylenediamine, and the content of blocked isocyanate groups (in terms of an isocyanate group) are shown in Table 1. With respect to the coating film formed from aqueous polyurethane resin dispersion (9), the degree of swelling with water, the degree of swelling with the cleaning fluid, and the result of the test of adhesion to the electrodeposition surface are shown in Table 2.

[Preparation of polyurethane film (I)]

Aqueous polyurethane resin dispersion (9) was applied as a coating material composition to a glass plate, and dried at 120°C for 3 hours and at 140°C for 30 minutes to obtain an excellent coating layer. The obtained coating layer was peeled off to prepare polyurethane film (I). The obtained polyurethane film (I) has a thickness of 0.15 mm, and the tensile properties of the film are shown in Table 2.

[Example 10]

[Preparation of aqueous polyurethane resin dispersion (10)]

To the same reaction vessel as used in Example 1 were charged 149 g of ETERNACOLL UH-200 (registered trademark; polycarbonate diol, manufactured by Ube Industries, Ltd.; number average molecular weight: 1,993; hydroxyl value: 56.3 mg KOH/g; polycarbonate diol obtained by reacting 1,6-hexanediol with dimethyl carbonate), 150 g of ETERNACOLL UH-300 (registered trademark; polycarbonate diol, manufactured by Ube Industries, Ltd.; number average molecular weight: 2,906; hydroxyl value: 38.6 mg KOH/g; polycarbonate diol obtained by reacting 1,6-hexanediol with dimethyl carbonate), 20.8 g of 2,2-dimethylolpropionic acid (DMPA), and 147 g of N-methylpyrrolidone (NMP) under a stream of nitrogen gas. 130 g of 4,4'-dicyclohexylmethane diisocyanate (hydrogenated MDI) and 0.36 g of dibutyltin dilaurate (catalyst) were added to the reaction vessel, and the resultant mixture was heated to 90°C to effect an urethane-forming reaction for 5 hours. Then, 5.63 g of 3,5-dimethylpyrazole (DMPZ) was charged into the vessel, and the resultant mixture was stirred at the same temperature for 1.5 hour to obtain a polyurethane prepolymer. At the time of completion of the urethane-forming reaction, the free NCO group content was 2.16 wt %. 17.1 g of triethylamine was added to and mixed into the reaction mixture, and 571 g of the resultant mixture was withdrawn and poured into 850 g of water while stirring at a high speed. Then, 23.7 g of adipic dihydrazide (ADH) was added to the mixture to effect a chain extension reaction, obtaining an aqueous polyurethane resin dispersion. With respect to the obtained aqueous polyurethane resin dispersion (10), the content of urethane bonds, the content of urea bonds, the content of carbonate bonds, the weight average molecular weight, the content of the alicyclic structure, the acid value, the content of the alkanedioic dihydrazide, the content of the alkylenediamine, and the content of blocked isocyanate groups (in terms of an isocyanate group) are shown in Table 1. With respect to the coating film formed from aqueous polyurethane resin dispersion (10), the degree of swelling with water, the degree of swelling with the cleaning fluid, and the result of the test of adhesion to the electrodeposition surface are shown in Table 2.

[Preparation of polyurethane film (J)]

Aqueous polyurethane resin dispersion (10) was applied as a coating material composition to a glass plate, and dried at 120°C for 3 hours and at 140°C for 30 minutes to obtain an excellent coating layer. The obtained coating layer was peeled off to prepare polyurethane film (J). The obtained polyurethane film (J) has a thickness of 0.15 mm, and the tensile properties of the film are shown in Table 2.

[Example 11]

[Preparation of aqueous polyurethane resin dispersion (11)]

To the same reaction vessel as used in Example 1 were charged 331 g of ETERNACOLL UH-300 (registered trademark; polycarbonate diol, manufactured by Ube Industries, Ltd.; number average molecular weight: 2,906; hydroxyl value: 38.6 mg KOH/g; polycarbonate diol obtained by reacting 1,6-hexanediol with dimethyl carbonate), 21.9 g of 2,2-dimethylolpropionic acid (DMPA), and 159 g of N-methylpyrrolidone (NMP) under a stream of nitrogen gas. 125 g of 4,4'-dicyclohexylmethane diisocyanate (hydrogenated MDI) and 0.39 g of dibutyltin dilaurate (catalyst) were added to the reaction vessel, and the resultant mixture was heated to 90°C to effect an urethane-forming reaction for 5 hours. Then, 9.66 g of 3,5-dimethylpyrazole (DMPZ) was charged into the vessel, and the resultant mixture was stirred at the same temperature for 1.5 hour to obtain a polyurethane prepolymer. At the time of completion of the urethane-forming reaction, the free NCO group content was 1.75 wt %. 16.6 g of triethylamine was added to and mixed into the reaction mixture, and 611 g of the resultant mixture was withdrawn and poured into 890 g of water while stirring at a high speed. Then, 20.3 g of adipic dihydrazide (ADH) was added to the mixture to effect a chain extension reaction, obtaining an aqueous polyurethane resin dispersion. With respect to the obtained aqueous polyurethane resin dispersion (11), the content of urethane bonds, the content of urea bonds, the content of carbonate bonds, the weight average molecular weight, the content of the alicyclic structure, the acid value, the content of the alkanedioic dihydrazide, the content of the alkylenediamine, and the content of blocked isocyanate groups (in terms of an isocyanate group) are shown in Table 1. With respect to the coating film formed from aqueous polyurethane resin dispersion (11), the degree of swelling with water, the degree of swelling with the cleaning fluid, and the result of the test of adhesion to the electrodeposition surface are shown in Table 2.

[Preparation of polyurethane film (K)]

Aqueous polyurethane resin dispersion (11) was applied as a coating material composition to a glass plate, and dried at 120°C for 3 hours and at 140°C for 30 minutes to obtain an excellent coating layer. The obtained coating layer was peeled off to prepare polyurethane film (K). The obtained polyurethane film (K) has a thickness of 0.15 mm, and the tensile properties of the film are shown in Table 2.

[Example 12]

[Preparation of aqueous polyurethane resin dispersion (12)]

To the same reaction vessel as used in Example 1 were charged 302 g of ETERNACOLL UH-200 (registered trademark; polycarbonate diol, manufactured by Ube Industries, Ltd.; number average molecular weight: 2,036; hydroxyl value: 55.1 mg KOH/g; polycarbonate diol obtained by reacting 1,6-hexanediol with dimethyl carbonate), 17.1 g of 2,2-dimethylolpropionic acid (DMPA), and 150 g of N-methylpyrrolidone (NMP) under a stream of nitrogen gas. 124 g of 4,4'-dicyclohexylmethane diisocyanate (hydrogenated MDI) and 0.35 g of dibutyltin dilaurate (catalyst) were added to the reaction vessel, and the resultant mixture was heated to 90°C to effect an urethane-forming reaction for 5 hours. Then, 4.15 g of 3,5-dimethylpyrazole (DMPZ) was charged into the vessel, and the resultant mixture was stirred at the same temperature for 1.5 hour to obtain a polyurethane prepolymer. At the time of completion of the urethane-forming reaction, the free NCO group content was 2.20 wt %. 13.4 g of triethylamine was added to and mixed into the reaction mixture, and 551 g of the resultant mixture was withdrawn and poured into 850 g of water while stirring at a high speed. Then, 23.2 g of adipic dihydrazide (ADH) was added to the mixture to effect a chain extension reaction, obtaining an aqueous polyurethane resin dispersion. With respect to the obtained aqueous polyurethane resin dispersion (12), the content of urethane bonds, the content of urea bonds, the content of carbonate bonds, the weight average molecular weight, the content of the alicyclic structure, the acid value, the content of the alkanedioic dihydrazide, the content of the alkylenediamine, and the content of blocked isocyanate groups (in terms of an isocyanate group) are shown in Table 1. With respect to the coating film formed from aqueous polyurethane resin dispersion (12), the degree of swelling with water, the degree of swelling with the cleaning fluid, and the result of the test of adhesion to the electrodeposition surface are shown in Table 2.

[Preparation of polyurethane film (L)]

Aqueous polyurethane resin dispersion (12) was applied as a coating material composition to a glass plate, and dried at 120°C for 3 hours and at 140°C for 30 minutes to obtain an excellent coating layer. The obtained coating layer was peeled off to prepare polyurethane film (L). The obtained polyurethane film (L) has a thickness of 0.15 mm, and the tensile properties of the film are shown in Table 2.

[Example 13]

[Preparation of aqueous polyurethane resin dispersion (13)]

To the same reaction vessel as used in Example 1 were charged 301 g of ETERNACOLL UH-200 (registered trademark; polycarbonate diol, manufactured by Ube Industries, Ltd.; number average molecular weight: 2,004; hydroxyl value: 56.0 mg KOH/g; polycarbonate diol obtained by reacting 1,6-hexanediol with dimethyl carbonate), 20.6 g of 2,2-dimethylolpropionic acid (DMPA), and 153 g of N-methylpyrrolidone (NMP) under a stream of nitrogen gas. 136 g of 4,4'-dicyclohexylmethane diisocyanate (hydrogenated MDI) and 0.36 g of dibutyltin dilaurate (catalyst) were added to the reaction vessel, and the resultant mixture was heated to 90°C to effect an urethane-forming reaction for 5 hours. Then, 11.4 g of 3,5-dimethylpyrazole (DMPZ) was charged into the vessel, and the resultant mixture was stirred at the same temperature for 1.5 hour to obtain a polyurethane prepolymer. At the time of completion of the urethane-forming reaction, the free NCO group content was 1.96 wt %. 15.6 g of triethylamine was added to and mixed into the reaction mixture, and 609 g of the resultant mixture was withdrawn and poured into 860 g of water while stirring at a high speed. 30.3 g of 35 wt % aqueous 2-methyl-1,5-pentanediamine (MPMD) solution was added to the mixture, and then 6.70 g of adipic dihydrazide (ADH) was added to effect a chain extension reaction, obtaining an aqueous polyurethane resin dispersion. With respect to the obtained aqueous polyurethane resin dispersion (13), the content of urethane bonds, the content of urea bonds, the content of carbonate bonds, the weight average molecular weight, the content of the alicyclic structure, the acid value, the content of the alkanedioic dihydrazide, the content of the alkylenediamine, and the content of blocked isocyanate groups (in terms of an isocyanate group) are shown in Table 1. With respect to the coating film formed from aqueous polyurethane resin dispersion (13), the degree of swelling with water, the degree of swelling with the cleaning fluid, and the result of the test of adhesion to the electrodeposition surface are shown in Table 2.

[Preparation of polyurethane film (M)]

Aqueous polyurethane resin dispersion (13) was applied as a coating material composition to a glass plate, and dried at 120°C for 3 hours and at 140°C for 30 minutes to obtain an excellent coating layer. The obtained coating layer was peeled off to prepare polyurethane film (M). The obtained polyurethane film (M) has a thickness of 0.15 mm, and the tensile properties of the film are shown in Table 2.

[Comparative Example 1]

[Preparation of aqueous polyurethane resin (14)]

To the same reaction vessel as used in Example 1 were charged 272 g of ETERNACOLL UH-200 (registered trademark; polycarbonate diol, manufactured by Ube Industries, Ltd.; number average molecular weight: 2,000; hydroxyl value: 56.1 mg KOH/g; polycarbonate diol obtained by reacting 1,6-hexanediol with dimethyl carbonate), 18.5 g of 2,2-dimethylolpropionic acid (DMPA), and 176 g of N-methylpyrrolidone (NMP) under a stream of nitrogen gas. 125 g of 4,4'-dicyclohexylmethane diisocyanate (hydrogenated MDI) and 0.3 g of dibutyltin dilaurate (catalyst) were added to the reaction vessel, and the resultant mixture was heated to 90°C to effect an urethane-forming reaction for 5 hours. Then, 10.4 g of 3,5-dimethylpyrazole (DMPZ) was charged into the vessel, and the resultant mixture was stirred at the same temperature for 1.5 hour to obtain a polyurethane prepolymer. At the time of completion of the urethane-forming reaction, the free NCO group content was 1.78 wt %. 13.9 g of triethylamine was added to and mixed into the reaction mixture, and 564 g of the resultant mixture was withdrawn and poured into 870 g of water while stirring at a high speed. Then, 36.5 g of 35 wt % aqueous 2-methyl-1,5-pentanediamine (MPMD) solution was added to the mixture to effect a chain extension reaction, obtaining an aqueous polyurethane resin dispersion. With respect to the obtained aqueous polyurethane resin dispersion (14), the content of urethane bonds, the content of urea bonds, the content of carbonate bonds, the weight average molecular weight, the content of the alicyclic structure, the acid value, the content of the alkanedioic dihydrazide, the content of the alkylenediamine, and the content of blocked isocyanate groups (in terms of an isocyanate group) are shown in Table 1. With respect to the coating film formed from aqueous polyurethane resin dispersion (14), the degree of swelling with water, the degree of swelling with the cleaning fluid, and the result of the test of adhesion to the electrodeposition surface are shown in Table 2.

[Preparation of polyurethane film (N)]

Aqueous polyurethane resin dispersion (14) was applied as a coating material composition to a glass plate, and dried at 120°C for 3 hours and at 140°C for 30 minutes to obtain an excellent coating layer. The obtained coating layer was peeled off to prepare polyurethane film (N). The obtained polyurethane film (N) has a thickness of 0.15 mm, and the tensile properties of the film are shown in Table 2.

[Comparative Example 2]

[Preparation of aqueous polyurethane resin (15)]

To a reaction vessel having a stirrer, a reflux condenser, and a thermometer inserted thereinto were charged 310 g of ETERNACOLL UH-200 (registered trademark; polycarbonate diol, manufactured by Ube Industries, Ltd.; number average molecular weight: 1,986; hydroxyl value: 56.4 mg KOH/g; polycarbonate diol obtained by reacting 1,6-hexanediol with dimethyl carbonate), 18.3 g of 2,2-dimethylolpropionic acid (DMPA), and 154 g of N-methylpyrrolidone (NMP) under a stream of nitrogen gas. Then, the resultant mixture was heated to 60°C while stirring to confirm that DMPA was dissolved. 133 g of 4,4'-dicyclohexylmethane diisocyanate (hydrogenated MDI) and 0.38 g of dibutyltin dilaurate (catalyst) were added to the reaction vessel, and the resultant mixture was heated to 90°C to effect an urethane-forming reaction for 5 hours. Then, 11.2 g of 3,5-dimethylpyrazole (DMPZ) was charged into the vessel, and the resultant mixture was stirred at the same temperature for 1.5 hour to obtain a polyurethane prepolymer. At the time of completion of the urethane-forming reaction, the free isocyanate group content was 1.79 wt %. The reaction mixture was cooled to 80°C and 13.9 g of triethylamine was added to and mixed into the cooled mixture, and 601 g of the resultant mixture was withdrawn and poured into 869 g of water while stirring at a high speed. 10.7 g of 35 wt % aqueous hydrazine (HDZ) solution was added to the mixture to effect a chain extension reaction, obtaining an aqueous polyurethane resin dispersion. With respect to the obtained aqueous polyurethane resin dispersion (15), the content of urethane bonds, the content of urea bonds, the content of carbonate bonds, the weight average molecular weight, the content of the alicyclic structure, the acid value, the content of the alkanedioic dihydrazide, the content of the alkylenediamine, and the content of blocked isocyanate groups (in terms of an isocyanate group) are shown in Table 1. With respect to the coating film formed from aqueous polyurethane resin dispersion (15), the degree of swelling with water, the degree of swelling with the cleaning fluid, and the result of the test of adhesion to the electrodeposition surface are shown in Table 2.

[Preparation of polyurethane film (O)]

Aqueous polyurethane resin dispersion (15) was applied as a coating material composition to a glass plate, and dried at 120°C for 3 hours and at 140°C for 30 minutes to obtain an excellent coating layer. The obtained coating layer was peeled off to prepare polyurethane film (O). The obtained polyurethane film (O) has a thickness of 0.15 mm, and the tensile properties of the film are shown in Table 2.

[Comparative Example 3]

[Preparation of aqueous polyurethane resin (16)]

To the same reaction vessel as used in Example 1 were charged 311 g of ETERNACOLL UH-200 (registered trademark; polycarbonate diol, manufactured by Ube Industries, Ltd.; number average molecular weight: 1,968; hydroxyl value: 57.0 mg KOH/g; polycarbonate diol obtained by reacting 1,6-hexanediol with dimethyl carbonate), 18.6 g of 2,2-dimethylolpropionic acid (DMPA), and 157 g of N-methylpyrrolidone (NMP) under a stream of nitrogen gas. Then, the resultant mixture was heated to 60°C while stirring to confirm that DMPA was dissolved. 138 g of 4,4'-dicyclohexylmethane diisocyanate (hydrogenated MDI) and 0.38 g of dibutyltin dilaurate (catalyst) were added to the reaction vessel, and the resultant mixture was heated to 90°C to effect an urethane-forming reaction for 5 hours. Then, 11.1 g of 3,5-dimethylpyrazole (DMPZ) was charged into the vessel, and the resultant mixture was stirred at the same temperature for 1.5 hour to obtain a polyurethane prepolymer. At the time of completion of the urethane-forming reaction, the free isocyanate group content was 1.49 wt %. The reaction mixture was cooled to 80°C and 13.8 g of triethylamine was added to and mixed into the cooled mixture, and 607 g of the resultant mixture was withdrawn and poured into 874 g of water while stirring at a high speed. 9.28 g of 35 wt % aqueous hydrazine (HDZ) solution was added to the mixture to effect a chain extension reaction, obtaining an aqueous polyurethane resin dispersion. With respect to the obtained aqueous polyurethane resin dispersion (16), the content of urethane bonds, the content of urea bonds, the content of carbonate bonds, the weight average molecular weight, the content of the alicyclic structure, the acid value, the content of the alkanedioic dihydrazide, the content of the alkylenediamine, and the content of blocked isocyanate groups (in terms of an isocyanate group) are shown in Table 1. With respect to the coating film formed from aqueous polyurethane resin dispersion (16), the degree of swelling with water, the degree of swelling with the cleaning fluid, and the result of the test of adhesion to the electrodeposition surface are shown in Table 2.

[Preparation of polyurethane film (P)]

Aqueous polyurethane resin dispersion (16) was applied as a coating material composition to a glass plate, and dried at 120°C for 3 hours and at 140°C for 30 minutes to obtain an excellent coating layer. The obtained coating layer was peeled off to prepare polyurethane film (P). The obtained polyurethane film (P) has a thickness of 0.15 mm, and the tensile properties of the film are shown in Table 2.

[Comparative Example 4]

[Preparation of aqueous polyurethane resin (17)]

To the same reaction vessel as used in Example 1 were charged 315 g of ETERNACOLL UH-200 (registered trademark; polycarbonate diol, manufactured by Ube Industries, Ltd.; number average molecular weight: 2,025; hydroxyl value: 55.4 mg KOH/g; polycarbonate diol obtained by reacting 1,6-hexanediol with dimethyl carbonate), 18.3 g of 2,2-dimethylolpropionic acid (DMPA), and 154 g of N-methylpyrrolidone (NMP) under a stream of nitrogen gas. Then, the resultant mixture was heated to 60°C while stirring to confirm that DMPA was dissolved. 131 g of 4,4'-dicyclohexylmethane diisocyanate (hydrogenated MDI) and 0.36 g of dibutyltin dilaurate (catalyst) were added to the reaction vessel, and the resultant mixture was heated to 90°C to effect an urethane-forming reaction for 5 hours. Then, 18.2 g of 3,5-dimethylpyrazole (DMPZ) was charged into the vessel, and the resultant mixture was stirred at the same temperature for 1.5 hour to obtain a polyurethane prepolymer. At the time of completion of the urethane-forming reaction, the free isocyanate group content was 1.26 wt %. The reaction mixture was cooled to 80°C and 13.8 g of triethylamine was added to and mixed into the cooled mixture, and 607 g of the resultant mixture was withdrawn and poured into 878 g of water while stirring at a high speed. 7.40 g of 35 wt % aqueous hydrazine (HDZ) solution was added to the mixture to effect a chain extension reaction, obtaining an aqueous polyurethane resin dispersion. With respect to the obtained aqueous polyurethane resin dispersion (17), the content of urethane bonds, the content of urea bonds, the content of carbonate bonds, the weight average molecular weight, the content of the alicyclic structure, the acid value, the content of the alkanedioic dihydrazide, the content of the alkylenediamine, and the content of blocked isocyanate groups (in terms of an isocyanate group) are shown in Table 1. With respect to the coating film formed from aqueous polyurethane resin dispersion (17), the degree of swelling with water, the degree of swelling with the cleaning fluid, and the result of the test of adhesion to the electrodeposition surface are shown in Table 2.

[Preparation of polyurethane film (Q)]

Aqueous polyurethane resin dispersion (17) was applied as a coating material composition to a glass plate, and dried at 120°C for 3 hours and at 140°C for 30 minutes to obtain an excellent coating layer. The obtained coating layer was peeled off to prepare polyurethane film (Q). The obtained polyurethane film (Q) has a thickness of 0.15 mm, and the tensile properties of the film are shown in Table 2.

[Comparative Example 5]

[Preparation of aqueous polyurethane resin (18)]

To the same reaction vessel as used in Example 1 were charged 261 g of ETERNACOLL UH-200 (registered trademark; polycarbonate diol, manufactured by Ube Industries, Ltd.; number average molecular weight: 2,000; hydroxyl value: 56.1 mg KOH/g; polycarbonate diol obtained by reacting 1,6-hexanediol with dimethyl carbonate), 17.5 g of 2,2-dimethylolpropionic acid (DMPA), and 166 g of N-methylpyrrolidone (NMP) under a stream of nitrogen gas. 115 g of 4,4'-dicyclohexylmethane diisocyanate (hydrogenated MDI) and 0.3 g of dibutyltin dilaurate (catalyst) were added to the reaction vessel, and the resultant mixture was heated to 90°C and stirred for 5 hours to obtain a polyurethane prepolymer. At the time of completion of the urethane-forming reaction, the free NCO group content was 2.50 wt %. 13.3 g of triethylamine was added to and mixed into the reaction mixture, and 512 g of the resultant mixture was withdrawn and poured into 850 g of water while stirring at a high speed. Then, 48.0 g of 35 wt % aqueous 2-methyl-1,5-pentanediamine (MPMD) solution was added to the mixture to effect a chain extension reaction, obtaining an aqueous polyurethane resin dispersion. With respect to the obtained aqueous polyurethane resin dispersion (18), the content of urethane bonds, the content of urea bonds, the content of carbonate bonds, the weight average molecular weight, the content of the alicyclic structure, the acid value, the content of the alkanedioic dihydrazide, the content of the alkylenediamine, and the content of blocked isocyanate groups (in terms of an isocyanate group) are shown in Table 1. With respect to the coating film formed from aqueous polyurethane resin dispersion (18), the degree of swelling with water, the degree of swelling with the cleaning fluid, and the result of the test of adhesion to the electrodeposition surface are shown in Table 2.

[Preparation of polyurethane film (R)]

Aqueous polyurethane resin dispersion (18) was applied as a coating material composition to a glass plate, and dried at 120°C for 3 hours and at 140°C for 30 minutes to obtain an excellent coating layer. The obtained coating layer was peeled off to prepare polyurethane film (R). The obtained polyurethane film (R) has a thickness of 0.15 mm, and the tensile properties of the film are shown in Table 2.

[Comparative Example 6]

[Preparation of aqueous polyurethane resin (19)]

To the same reaction vessel as used in Example 1 were charged 261 g of ETERNACOLL UH-200 (registered trademark; polycarbonate diol, manufactured by Ube Industries, Ltd.; number average molecular weight: 2,000; hydroxyl value: 56.1 mg KOH/g; polycarbonate diol obtained by reacting 1,6-hexanediol with dimethyl carbonate), 17.5 g of 2,2-dimethylolpropionic acid (DMPA), and 166 g of N-methylpyrrolidone (NMP) under a stream of nitrogen gas. 115 g of 4,4'-dicyclohexylmethane diisocyanate (hydrogenated MDI) and 0.3 g of dibutyltin dilaurate (catalyst) were added to the reaction vessel, and the resultant mixture was heated to 90°C and stirred for 5 hours to obtain a polyurethane prepolymer. At the time of completion of the urethane-forming reaction, the free NCO group content was 2.50 wt %. 13.3 g of triethylamine was added to and mixed into the reaction mixture, and 512 g of the resultant mixture was withdrawn and poured into 850 g of water while stirring at a high speed. Then, 33.6 g of 35 wt % aqueous 2-methyl-1,5-pentanediamine (MPMD) solution was added to the mixture to effect a chain extension reaction, and 22.3 g of 35 wt % aqueous butylamine (BA) solution was added to the resultant reaction mixture to effect a termination reaction for the end of molecular chain, obtaining an aqueous polyurethane resin dispersion. With respect to the obtained aqueous polyurethane resin dispersion (19), the content of urethane bonds, the content of urea bonds, the content of carbonate bonds, the weight average molecular weight, the content of the alicyclic structure, the acid value, the content of the alkanedioic dihydrazide, the content of the alkylenediamine, and the content of blocked isocyanate groups (in terms of an isocyanate group) are shown in Table 1. With respect to the coating film formed from aqueous polyurethane resin dispersion (19), the degree of swelling with water, the degree of swelling with the cleaning fluid, and the result of the test of adhesion to the electrodeposition surface are shown in Table 2.

[Preparation of polyurethane film (S)]

Aqueous polyurethane resin dispersion (19) was applied as a coating material composition to a glass plate, and dried at 120°C for 3 hours and at 140°C for 30 minutes to obtain an excellent coating layer. The obtained coating layer was peeled off to prepare polyurethane film (S). The obtained polyurethane film (S) has a thickness of 0.15 mm, and the tensile properties of the film are shown in Table 2.

[Comparative Example 7]

[Preparation of aqueous polyurethane resin dispersion (20)]

To the same reaction vessel as used in Example 1 were charged 290 g of ETERNACOLL UH-200 (registered trademark; polycarbonate diol, manufactured by Ube Industries, Ltd.; number average molecular weight: 1,962; hydroxyl value: 57.2 mg KOH/g; polycarbonate diol obtained by reacting 1,6-hexanediol with dimethyl carbonate), 21.3 g of 2,2-dimethylolpropionic acid (DMPA), and 149 g of N-methylpyrrolidone (NMP) under a stream of nitrogen gas. 139 g of 4,4'-dicyclohexylmethane diisocyanate (hydrogenated MDI) and 0.36 g of dibutyltin dilaurate (catalyst) were added to the reaction vessel, and the resultant mixture was heated to 90°C to effect an urethane-forming reaction for 5 hours. Then, 1.39 g of 3,5-dimethylpyrazole (DMPZ) was charged into the vessel, and the resultant mixture was stirred at the same temperature for 1.5 hour to obtain a polyurethane prepolymer. At the time of completion of the urethane-forming reaction, the free NCO group content was 2.67 wt %. 15.9 g of triethylamine was added to and mixed into the reaction mixture, and 576 g of the resultant mixture was withdrawn and poured into 920 g of water while stirring at a high speed. Then, 32.1 g of adipic dihydrazide (ADH) was added to the mixture to effect a chain extension reaction, obtaining an aqueous polyurethane resin dispersion. With respect to the obtained aqueous polyurethane resin dispersion (20), the content of urethane bonds, the content of urea bonds, the content of carbonate bonds, the weight average molecular weight, the content of the alicyclic structure, the acid value, the content of the alkanedioic dihydrazide, the content of the alkylenediamine, and the content of blocked isocyanate groups (in terms of an isocyanate group) are shown in Table 1. With respect to the coating film formed from aqueous polyurethane resin dispersion (20), the degree of swelling with water, the degree of swelling with the cleaning fluid, and the result of the test of adhesion to the electrodeposition surface are shown in Table 2.

[Preparation of polyurethane film (T)]

Aqueous polyurethane resin dispersion (20) was applied as a coating material composition to a glass plate, and dried at 120°C for 3 hours and at 140°C for 30 minutes to obtain an excellent coating layer. The obtained coating layer was peeled off to prepare polyurethane film (T). The obtained polyurethane film (T) has a thickness of 0.15 mm, and the tensile properties of the film are shown in Table 2.

[Table 1]

| Example | Component (b) | Component (d) | Component (B) | Optional component | Urethane bond content [wt%] | Urea bond content [wt%] | Total of urethane bond content and urea bond content [wt%] | Carbonate bond content [wt%] | Alicyclic structure content [wt%] | Blocked NCO content [wt%] | Acid value [mg-KOH /g] | Alkanedioic dihydrazide content [wt%] | Alkylene diamine content [wt%] | Weight average molecular weight Mw |
|---|---|---|---|---|---|---|---|---|---|---|---|---|---|---|
| Example 1 | UH-200 | DMPZ | ADH | - | 7.6 | 3.3 | 10.9 | 24.3 | 17.6 | 1.1 | 18 | 50 | 0.0 | 32,000 |
| Example 2 | UH-200 | DMPZ | ADH | - | 7.2 | 3.1 | 103 | 25.0 | 16.8 | 1.0 | 16 | 4.7 | 0.0 | 33,000 |
| Example 3 | UH-200/UH-300 | DMPZ | ADH | - | 7.1 | 3.0 | 10.1 | 25.2 | 16.4 | 1.0 | 18 | 4.5 | 0.0 | 36,000 |
| Example 4 | UH-200 | DMPZ | ADH | - | 7.5 | 4.1 | 11.6 | 23.9 | 17.5 | 0.4 | 18 | 6.1 | 0.0 | 78,000 |
| Example 5 | UH-300 | DMPZ | ADH | - | 6.5 | 3.6 | 10.1 | 26.2 | 14.5 | 0.4 | 18 | 5.4 | 0.0 | 77,000 |
| Example 6 | UH-200/UH-300 | DMPZ | ADH | - | 7.0 | 3.7 | 10.7 | 25.1 | 15.7 | 0.4 | 18 | 5.6 | 0.0 | 72,000 |
| Example 7 | UH-300 | MEKO/DMPZ | ADH | - | 6.7 | 2.8 | 9.5 | 26.5 | 15.2 | 0.9 | 18 | 4.3 | 0.0 | 36,000 |
| Example 8 | UH-200 | DMPZ | ADH/MPMD | - | 7.6 | 3.9 | 11.5 | 24.5 | 17.5 | 0.4 | 18 | 1.1 | 3.1 | 78,000 |
| Example 9 | UH-200 | DMPZ | ADH/MPMD | - | 7.6 | 3.0 | 10.6 | 24.8 | 17.5 | 1.1 | 18 | 0.9 | 2.4 | 36,000 |
| Example 10 | UH-200/UH-300 | DMPZ | ADH | - | 7.0 | 3.6 | 10.6 | 24.8 | 16.3 | 0.5 | 18 | 5.4 | 0.0 | 57,000 |
| Example 11 | UH-300 | DMPZ | ADH | - | 66 | 2.9 | 9.5 | 26.7 | 15.2 | 0.8 | 18 | 4.4 | 0.0 | 33,000 |
| Example 12 | UH-200 | DMPZ | ADH | - | 7.0 | 3.8 | 10.8 | 25.5 | 16.1 | 0.4 | 15 | 5.6 | 0.0 | 82,000 |
| Example 13 | UH-200 | DMPZ | MPMD/ADH | - | 7.6 | 3.2 | 10.8 | 25.1 | 17.5 | 1.1 | 18 | 1.5 | 2.3 | 35,000 |
| Comparative example 1 | UH-200 | DMPZ | MPMD | - | 7.6 | 3.2 | 10.8 | 25.2 | 17.5 | 1.1 | 18 | 0.0 | 3.2 | 40,000 |
| Comparative example 2 | UH-200 | DMPZ | HDZ | - | 7.5 | 3.2 | 10.7 | 26.5 | 17.3 | 1.0 | 16 | 0.0 | 0.0 | 35,000 |

EP 2 832 756 A1

(continued)

| Example | Component (b) | Component (d) | Component (B) | Optional component | Urethane bond content [wt%] | Urea bond content [wt%] | Total of urethane bond content and urea bond content [wt%] | Carbonate bond content [wt%] | Alicyclic structure content [wt%] | Blocked NCO content [wt%] | Acid value [mg-KOH /g] | Alkanedioic dihydrazide content [wt%] | Alkylene diamine content [wt%] | Weight average molecular weight Mw |
|---|---|---|---|---|---|---|---|---|---|---|---|---|---|---|
| Comparative example 3 | UH-200 | DMPZ | HDZ | - | 7.6 | 2.8 | 10.4 | 26.5 | 17.3 | 1.4 | 16 | 0.0 | 0.0 | 28,000 |
| Comparative example 4 | UH-200 | DMPZ | HDZ | - | 7.5 | 2.3 | 9.8 | 26.7 | 17.1 | 1.7 | 16 | 0.0 | 0.0 | 22,000 |
| Comparative example 5 | UH-200 | - | MPMD | - | 7.5 | 4.6 | 12.1 | 23.6 | 17.2 | 0.0 | 18 | 0.0 | 4.6 | 280,000 |
| Comparative example 6 | UH-200 | - | MPMD | BA | 7.3 | 4.4 | 11.7 | 24.2 | 16.7 | 0.0 | 18 | 0.0 | 3.2 | 40,000 |
| Comparative example 7 | UH-200 | DMPZ | ADH | - | 7.6 | 4.5 | 12.1 | 23.9 | 17.4 | 0.1 | 18 | 6.7 | 0.0 | 168,000 |

[Table 2]

| | Degree of swelling | | Tensile properties | | | | Adhesion to electrodeposition layer surface |
|---|---|---|---|---|---|---|---|
| | Water [%] | Cleaning fluid [%] | Elastic modulus [MPa] | Tensile strength [MPa] | Elongation at break [%] | Breaking energy [MPa] | |
| Example 1 | 200 | 61 | 74 | 62 | 460 | 150 | 25/25 |
| Example 2 | 79 | 64 | 53 | 60 | 490 | 140 | 25/25 |
| Example 3 | 45 | 81 | 48 | 60 | 500 | 140 | 25/25 |
| Example 4 | 16 | 23 | 120 | 79 | 450 | 180 | 25/25 |
| Example 5 | 8 | 44 | 55 | 72 | 510 | 170 | 25/25 |
| Example 6 | 15 | 31 | 79 | 69 | 490 | 170 | 25/25 |
| Example 7 | 20 | 69 | 38 | 65 | 530 | 170 | 25/25 |
| Example 8 | 4 | 9 | 81 | 78 | 500 | 190 | 25/25 |
| Example 9 | 12 | 56 | 52 | 60 | 510 | 150 | 25/25 |
| Example 10 | 16 | 62 | 96 | 67 | 460 | 160 | 25/25 |
| Example 11 | 11 | 72 | 29 | 53 | 500 | 200 | 25/25 |
| Example 12 | 13 | 35 | 140 | 85 | 540 | 210 | 25/25 |
| Example 13 | 12 | 58 | 56 | 60 | 500 | 150 | 25/25 |
| Comparative example 1 | 7 | 9 | 45 | 51 | 450 | 120 | 25/25 |
| Comparative example 2 | 48 | 18 | 44 | 48 | 380 | 110 | 25/25 |
| Comparative example 3 | 64 | 32 | 32 | 38 | 400 | 100 | 25/25 |
| Comparative example 4 | 160 | 51 | 12 | 21 | 400 | 20 | 25/25 |
| Comparative example 5 | 5 | 3 | 160 | 64 | 410 | 130 | 15/25 |
| Comparative example 6 | 7 | 10 | 20 | 10 | 230 | 46 | 9/25 |
| Comparative example 7 | 0 | 3 | 210 | 86 | 550 | 240 | 25/25 |

The entire disclosure of Japanese Patent Application No. 2012-075640 is cited in the present specification.

All the documents, patent applications, and technical standards described in the present specification are incorporated into the present specification by reference as in the case where it is specifically and individually shown that each of the documents, patent applications, and technical standards is incorporated into the present specification by reference.

INDUSTRIAL APPLICABILITY

The aqueous polyurethane resin dispersion of the present invention can be widely used as, for example, a raw material for a paint or a coating agent.

**Claims**

1. An aqueous polyurethane resin dispersion wherein a polyurethane resin is dispersed in an aqueous medium, wherein the polyurethane resin is obtained by reacting (A) a polyurethane prepolymer with (B) a chain extender that has reactivity with isocyanate groups of the polyurethane prepolymer,

   wherein (A) the polyurethane prepolymer is obtained by reacting (a) a polyisocyanate compound, (b) at least one polyol compound comprising a polycarbonate polyol that has a number average molecular weight of 800 to 3,500, (c) an acid group-containing polyol compound, with (d) a blocking agent for isocyanate group that dissociates at 80 to 180°C,

   wherein the total of the content of urethane bonds and the content of urea bonds in the aqueous polyurethane resin dispersion is 8 to 13 wt % based on a solid content, the content of carbonate bonds in the aqueous polyurethane resin dispersion is 15 to 40 wt % based on the solid content, and the content of isocyanate groups wherein the blocking agent is bonded thereto in the aqueous polyurethane resin dispersion is 0.3 to 2.0 wt % based on the solid content and in terms of an isocyanate group, and

   wherein (B) the chain extender contains an alkanedioic dihydrazide having 4 to 10 carbon atoms as an essential component.

2. The aqueous polyurethane resin dispersion according to claim 1, wherein the content of the alkanedioic dihydrazide having 4 to 10 carbon atoms in the aqueous polyurethane resin dispersion is 0.8 to 10 wt % based on the solid content.

3. The aqueous polyurethane resin dispersion according to claim 1 or 2, wherein the alkanedioic dihydrazide having 4 to 10 carbon atoms is adipic dihydrazide.

4. The aqueous polyurethane resin dispersion according to any one of claims 1 to 3, wherein (B) the chain extender contains an alkylenediamine as an optional component in an amount of 0 to 4 wt % based on the solid content.

5. The aqueous polyurethane resin dispersion according to claim 4, wherein the alkylenediamine is 2-methyl-1,5-pentanediamine.

6. The aqueous polyurethane resin dispersion according to any one of claims 1 to 5, wherein the polyurethane resin has a weight average molecular weight of 20,000 to 100,000.

7. The aqueous polyurethane resin dispersion according to any one of claims 1 to 6, which has an acid value of 10 to 30 mg KOH/g.

8. The aqueous polyurethane resin dispersion according to any one of claims 1 to 7, wherein the polyurethane resin contains an alicyclic structure, and wherein the content of the alicyclic structure in the aqueous polyurethane resin dispersion is 10 to 30 wt % based on the solid content.

9. The aqueous polyurethane resin dispersion according to any one of claims 1 to 8, wherein (a) the polyisocyanate compound is an alicyclic diisocyanate.

10. The aqueous polyurethane resin dispersion according to any one of claims 1 to 9, wherein (d) the blocking agent is at least one member selected from the group consisting of an oxime compound, a pyrazole compound, and a malonic ester compound.

11. A coating material composition comprising the aqueous polyurethane resin dispersion according to any one of claims 1 to 10.

12. A polyurethane resin film produced by drying a composition comprising the aqueous polyurethane resin dispersion according to any one of claims 1 to 10 by heating it.

## INTERNATIONAL SEARCH REPORT

International application No.

PCT/JP2013/059190

### A. CLASSIFICATION OF SUBJECT MATTER

*C08G18/12*(2006.01)i, *C08K5/17*(2006.01)i, *C08K5/24*(2006.01)i, *C08K5/33*
(2006.01)i, *C08L75/04*(2006.01)i, *C09D5/02*(2006.01)i, *C09D175/04*(2006.01)i

According to International Patent Classification (IPC) or to both national classification and IPC

### B. FIELDS SEARCHED

Minimum documentation searched (classification system followed by classification symbols)
C08G18/12, C08K5/17, C08K5/24, C08K5/33, C08L75/04, C09D5/02, C09D175/04

Documentation searched other than minimum documentation to the extent that such documents are included in the fields searched
Jitsuyo Shinan Koho          1922–1996    Jitsuyo Shinan Toroku Koho    1996–2013
Kokai Jitsuyo Shinan Koho    1971–2013    Toroku Jitsuyo Shinan Koho    1994–2013

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | WO 2010/098316 A1   (Ube Industries, Ltd.),<br>02 September 2010 (02.09.2010),<br>claims 1 to 4, 6, 7, 9, 10; paragraphs [0005],<br>[0009], [0020], [0042], [0062]<br>& US 2011/0313101 A1      & EP 2433974 A1<br>& CN 102333805 A          & TW 201035149 A<br>& KR 10-2011-0129429 A | 1–12 |
| Y | JP 2011-213884 A   (Ube Industries, Ltd.),<br>27 October 2011 (27.10.2011),<br>claims 1, 5; paragraphs [0010], [0077], [0082],<br>[0083]<br>(Family: none) | 1–12 |

☒   Further documents are listed in the continuation of Box C.       ☐   See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>15 April, 2013 (15.04.13) | Date of mailing of the international search report<br>23 April, 2013 (23.04.13) |
|---|---|
| Name and mailing address of the ISA/<br>Japanese Patent Office | Authorized officer |
| Facsimile No. | Telephone No. |

Form PCT/ISA/210 (second sheet) (July 2009)

**INTERNATIONAL SEARCH REPORT**

International application No.

PCT/JP2013/059190

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2005-15626 A  (Dai-Ichi Kogyo Seiyaku Co., Ltd.), 20 January 2005 (20.01.2005), claims 2, 5, 7; paragraphs [0008], [0040] (Family: none) | 1-12 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP HEI10120757 B
- JP 2002128851 A
- JP 2000104015 A
- JP 2005220255 A
- JP 2010098316 A
- JP 2012075640 A

**Non-patent literature cited in the description**

- Latest Polyurethane Materials and Applied Techniques. CMC Publishing Co., Ltd, 43